# EUROPÄISCHE PATENTANMELDUNG

(11) **EP 2 653 513 A2**
(43) Veröffentlichungstag der Anmeldung: **23.10.2013**
(21) Anmeldenummer: 13001566.2
(22) Anmeldetag: 26.03.2013
(51) Int. Cl.: C09J 5/02

(54) **Verklebungsverfahren und auf diese Weise hergestellte Produkte**

(30) Priorität: 20.04.2012 DE 102012007788; 27.04.2012 DE 102012008401
(71) Anmelder: Jowat AG, 32758 Detmold (DE)
(72) Erfinder: Terfloth, Christian, D - 32760 Detmold (DE); Guse, Dieter, D - 32584 Löhne (DE); Starck, Felix, D - 32760 Detmold (DE)
(74) Vertreter: Von Rohr

(57) **Zusammenfassung**

Die Erfindung betrifft ein Verfahren zur Anbringung einer Kante, insbesondere Kunststoffkante auf einen Werkstoff sowie die auf diese Weise erhaltenen Produkte und deren Verwendung.

## Beschreibung

Die vorliegende Erfindung betrifft das technische Gebiet der Kunststoff- bzw. Klebstofftechnologie, insbesondere die Verklebung von Kanten, insbesondere Kunststoffkanten bzw. Kantenbändern.

Insbesondere betrifft die vorliegende Erfindung ein Verfahren zur Aufbringung von Kanten, insbesondere Kunststoffkanten, auf Werkstoffe sowie die auf diese Weise hergestellten Produkte und deren Verwendung.

Weiterhin betrifft die vorliegende Erfindung ein Verfahren zur Aufbringung von mittels Laserstrahlung aktivierbaren Klebstoffschichten auf Kanten, insbesondere Kantenbänder. Gleichermaßen betrifft die vorliegende Erfindung zudem Kantenbänder, welche auf mindestens einer Seite mit einer mittels Laserstrahlung aktivierbaren Klebstoffschicht versehen sind.

Schließlich betrifft die vorliegende Erfindung die erfindungsgemäße Verwendung einer Zusammensetzung zur Ausrüstung eines Kantenbands mit einer Klebstoffschicht.

Im Stand der Technik ist eine Vielzahl von Methoden zur Anbringung von Kantenbändern auf die Schmalflächen insbesondere plattenförmiger Werkstücke bekannt.

Üblicherweise werden im Stand der Technik Kantenbänder in Durchlaufmaschinen, wie beispielsweise Kantenbearbeitungsmaschinen, mit Hilfe von Kantenanleimaggregaten auf den Schmalflächen plattenförmiger Werkstücke angebracht. Dabei ist es im Allgemeinen vorgesehen, die Werkstückschmalfläche unmittelbar vor dem Anfahren des Kantenbands mit einem Schmelzklebstoff, insbesondere sogenannten "Hotmelts", zu beaufschlagen.

Bei der Anbringung der Kantenbänder in Durchlaufmaschinen mit unmittelbar vor dem Anfahren des Kantenbands erfolgenden Schmelzklebstoffauftrag handelt es sich um ein kostengünstiges Verfahren, welches sich auch zur Herstellung größerer Stückzahlen eignet. Dennoch bringt dieses Verfahren eine Vielzahl von Nachteilen mit sich.

So ist das Aufschmelzen des Schmelzklebstoffs energieaufwendig und führt insgesamt zu einer Erhöhung der Betriebskosten; es vergeht beispielsweise bis zu einer halben Stunde, bis eine Betriebstemperatur von 150 bis 210 °C erreicht wird. Darüber hinaus wird Energie zur Beheizung des Leimbehälters benötigt, um den Klebstoff während des gesamten Produktionsprozesses im flüssigen bzw. auftragungsfähigen Zustand zu halten. Der Klebstoffauftrag erfolgt üblicherweise durch Sprühen, Düsen, Walzen oder Rakeln auf das Werkstück.

Weiterhin erfordert das zuvor beschriebene Verfahren verhältnismäßig große Mengen des Klebstoffs. In der Folge wird die Klebstofffuge nach Verfestigung anfälliger für das Eindringen von Schmutz und Feuchtigkeit, so dass es im Laufe der Zeit einerseits zum Lösen der Verklebung kommen kann und andererseits die Klebstoffkante hinsichtlich ästhetischer Gesichtspunkte oftmals nicht zufriedenstellend ausgestaltet ist.

Auch führt der Einsatz des Klebstoffs in derart großen Mengen beim anschließenden Andrücken des Kantenbandes an das Werkstück zu einem Herausquellen von Klebstoff aus der Klebefuge, was zu Verschmutzungen sowohl des Werkstücks als auch der Verarbeitungsmaschine führt. Um dies zu verhindern, muss das Werkstück vor Verfahrensbeginn aufwendig und kostenintensiv mit Trennmitteln behandelt werden.

Im Übrigen sind auf diese Weise nur Schmelzklebstoffe mit relativ geringen Molekulargewichten und relativ hohen Schmelzindizes verarbeitbar, welche aber nicht immer zu den gewünschten Verklebungsqualitäten führen.

Aufgrund der zuvor geschilderten Nachteile dieses Verfahrens wird seit geraumer Zeit nach alternativen Möglichkeiten zur Anbringung von Kantenbändern auf Schmalflächen von plattenförmigen Werkstücken gesucht.

Andere Verfahren des Standes der Technik versuchen, diese Nachteile durch Bereitstellung von mit Klebstoff vorbeschichteten Kantenbändern zu vermeiden, welche die nachträgliche Anbringung an die Schmalfläche zu einem beliebigen Zeitpunkt nach dem Klebstoffauftrag ermöglichen.

Zur Erzeugung von mit Klebstoff vorbeschichteten Kantenbändern sind verschiedene Verfahren im Stand der Technik bekannt. Zwar führen derartige Verfahren zu einer Verbesserung in Bezug auf die zuvor genannten Nachteile und ermöglichen insbesondere eine flexiblere Verfahrensführung, sind aber dennoch in vielfacher Hinsicht nicht zufriedenstellend.

Eine Möglichkeit zur Herstellung von vorbeschichteten Kantenbändern besteht in der Koextrusion. Dabei werden thermoplastische Kantenbänder im Rahmen von sogenannten Inline-Prozessen mit einer nachträglich aktivierbaren Kunststoff- oder Klebstoffschicht hergestellt, d. h. die Herstellung des Kantenbands einerseits und die Beaufschlagung mit Kunststoff oder Klebstoff andererseits erfolgen sozusagen zeitgleich. Mittels Koextrusion lassen sich auch Polymere mit einem besonders hohen Molekulargewicht verarbeiten, was zu besonders stabilen Klebeverbindungen führt. Dennoch ist dieses Verfahren mit zahlreichen Nachteilen verbunden.

Koextrusionsverfahren erfordern besonders hohe Investitionen in Bezug auf die Produktionsanlage, da diese an den jeweiligen Prozess immer individuell angepasst werden muss. Diese Technologie ist somit nur für große Losgrößen bzw. Chargen wirtschaftlich; insbesondere die Produktion individueller Ausführungsformen, welche nicht in großen Mengen vertrieben werden, ist oftmals in ökonomischer Hinsicht nicht sinnvoll.

Darüber hinaus sind derartige Verfahren auch in technischer Hinsicht mit zahlreichen Nachteilen verbunden. Denn bei Koextrusionsverfahren muss die direkte Verbindung von thermoplastischem Kantenband und Kunststoff- bzw. Klebstoffschicht ohne die Verwendung eines Haftvermittlers erfolgen. Aufgrund der fehlenden Haftvermittlerschicht kann folglich nur zwischen gleichartigen Materialien eine ausreichende Adhäsion erzielt werden. Auch ist der Einsatz von beispielsweise harzgetränkten Papierkanten oder Furnierkanten als Kantenband nicht möglich, da ausschließlich thermoplastische Materialien extrudierbar sind.

Insgesamt besteht somit nur eine stark begrenzte Auswahl an Materialien bzw. eine begrenzte Auswahl an Materialkombinationen, welche zur Produktion von vorbeschichteten Kantenbändern eingesetzt werden können.

Neben der Herstellung von beschichteten Kantenbändern mittels Koextrusion ist es auch möglich, Kantenbänder im Rahmen von Offline-Prozessen mit einem Schmelzklebstoff bzw. Hotmelt zu beschichten. Bei diesen Verfahren wird zunächst das Kantenband als solches hergestellt und erst später, beispielsweise durch einen Lohnbeschichter oder einen Hersteller von Möbelteilen, mit einem nachträglich aktivierbaren Klebstoff beschichtet. Derartige Offline-Prozesse bieten insgesamt eine gute Flexibilität in Bezug auf die zu beschichtenden Kantenwerkstoffe und erlauben aufgrund der kostengünstigen Verfahrensführung auch die Ausrüstung kleiner Chargen bzw. Losgrößen: Wie auch bei den mittels Koextrusion hergestellten beschichteten Kantenbändern kann die Aktivierung bzw. endgültige Verklebung der Kante, insbesondere Kunststoffkante, mit dem jeweiligen Werkstoffteil zu einem beliebigen Zeitraum nach Fertigstellung des beschichteten Kantenbandes erfolgen. Dennoch sind auch derartige Verfahren mit gravierenden Nachteilen verbunden. Besonders problematisch ist, dass der Einsatz von Polymeren mit hohen Molekulargewichten und niedrigen Schmelzindizes nicht möglich ist, da die hierfür erforderlichen hohen Temperaturen nicht im Offline-Betrieb erreicht werden können. Zwar lassen sich im Rahmen derartiger Offline-Prozesse die Kantenbänder deutlich kostengünstiger beschichten, allerdings sind die resultierenden Klebeverbindungen den mittels Koextrusion hergestellten Kantenbändern in Bezug auf die Gebrauchseigenschaften unterlegen und lediglich mit der herkömmlichen Kantenanleimung mit thermoplastischen Hotmelts zu vergleichen, wie sie zuvor beschrieben wurde.

Das Aufschmelzen der Klebstoffschicht sowohl von durch Koextrusion erzeugten als auch von nachbeschichteten Kantenbändern zur nachfolgenden Anbringung des Kantenbandes an einen Werkstoff erfolgt üblicherweise durch Heißluft, Infrarot-, UV-, Laser-, Plasma- oder Mikrowellenstrahlung. Oftmals erfolgt dabei jedoch ein nur schwach ausgeprägter bzw. schlecht steuerbarer Energietransfer auf den Klebstoff, so dass die Erwärmung verhältnismäßig langwierig bzw. unspezifisch ist. Darüber hinaus wird insbesondere aufgrund der schlechten Steuerbarkeit häufig das Kantenband selbst miterwärmt. Die ist jedoch der Qualität des Kantenbandes abträglich, da eine Erwärmung des Kantenbandes zu einer Materialschädigung führen kann, was wiederum in einer Einschränkung der Kantenbandmaterialien auf unempfindliche Materialien resultiert.

Beispielsweise beschreibt die EP 1 163 864 A1 Möbelplatten und ein Verfahren zu deren Herstellung, wobei vorgesehen ist, eine durch Koextrusion erzeugte thermoplastische Kunststoffkante mit Schichten unterschiedlicher Härte mittels Heißluft oder Laserstrahlung aufzuschmelzen und an die Möbelplatte aus einem Holzwerkstoff anzubringen. Wie zuvor bereits beschrieben, ist jedoch der Einsatz der Koextrusion zur Herstellung beschichteter Kantenbänder in vielerlei Hinsicht nachteilig. Aufgrund einer fehlenden Klebstoffschicht auf Basis von hochmolekularen Polymeren ist zudem die Stabilität bzw. Qualität der auf diese Weise erzeugten Klebeverbindung nicht zufriedenstellend.

Weiterhin beschreibt die DE 10 2006 021 171 A1 Deckleisten auf Basis von thermoplastischen Kunststoffen, welche ebenfalls mittels Koextrusion hergestellt werden und im Rahmen ihres Herstellungsprozesses mit einer durch Laserstrahlung aktivierbaren Schmelzklebstoffschicht versehen werden. Auch dieses Verfahren ist mit den zuvor beschriebenen allgemeinen Nachteilen von Koextrusionsverfahren verbunden.

Die WO 2009/026977 A1 beschreibt Kantenleisten für Möbelstücke, welche eine unter Energiezufuhr aktivierbare Schmelzschicht aufweisen, wobei die beschichtete Kantenleiste mittels Koextrusion hergestellt wird. Die dabei resultierenden Klebstofffugen weisen jedoch eine relativ große Dicke von bis zu 1,5 mm auf, was - wie ebenfalls zuvor beschrieben - einerseits im Hinblick auf ästhetische Gesichtspunkte unerwünscht ist und andererseits zu einem schnelleren Verschmutzen bzw. Lösen der Klebstoffschicht führen kann. Insbesondere lässt sich aufgrund der verhältnismäßig dicken Klebstoffschicht keine zielgerichtete und effiziente Reaktivierung des Klebstoffs erzielen.

Vor diesem Hintergrund liegt daher der vorliegenden Erfindung die Aufgabe zugrunde, ein Verfahren zur Anbringung von Kantenbändern bereitzustellen, welches die zuvor geschilderten Nachteile des Standes der Technik zumindest weitgehend vermeiden oder aber wenigstens abzuschwächen imstande ist.

Insbesondere ist eine Aufgabe der vorliegenden Erfindung darin zu sehen, ein Verfahren zur Anbringung von Kanten, insbesondere Kunststoffkanten, auf Werkstücken bereitzustellen, welches die Flexibilität von Nachbeschichtungsverfahren (Offline-Prozessen) besitzt, dabei jedoch die Erzeugung hochwertigerer Klebeverbindungen ermöglicht.

Zur Lösung des zuvor geschilderten Problems schlägt die vorliegende Erfindung - gemäß einem ersten Aspekt der vorliegenden Erfindung - ein Verfahren zur Anbringung einer Kante, insbesondere Kunststoffkante, auf einem Werkstoff nach Anspruch 1 vor; weitere, insbesondere vorteilhafte Ausgestaltungen des erfindungsgemäßen Verfahrens sind Gegenstand der diesbezüglichen Unteransprüche.

Weiterhin betrifft die vorliegende Erfindung - gemäß einem zweiten Aspekt der vorliegenden Erfindung - einen nach dem erfindungsgemäßen Verfahren erhältlichen Werkstoff gemäß den diesbezüglichen unabhängigen Ansprüchen.

Weiterhin betrifft die vorliegende Erfindung - gemäß einem dritten Aspekt der vorliegenden Erfindung - die Verwendung eines erfindungsgemäßen Werkstoffs zur Herstellung von Möbeln gemäß dem diesbezüglichen unabhängigen Anspruch.

Zudem betrifft die vorliegende Erfindung - gemäß einem vierten Aspekt der vorliegenden Erfindung - ein Verfahren zur Aufbringung einer mittels Laserstrahlung aktivierbaren (laseraktivierbaren) Klebstoffschicht (Kunststoffschicht) auf mindestens einer Seite eines Kantenbands (Kantenstreifens) gemäß dem diesbezüglichen unabhängigen Anspruch.

Weiterhin betrifft die vorliegende Erfindung - gemäß einem fünften Aspekt der vorliegenden Erfindung - ein Kantenband bzw. einen Kantenstreifen gemäß den diesbezüglichen unabhängigen Ansprüchen.

Schließlich betrifft die vorliegende Erfindung - gemäß einem sechsten Aspekt der vorliegenden Erfindung - die Verwendung einer Zusammensetzung, welche mindestens ein Klebstoffpolymer und mindestens ein Laserstrahlung absorbierendes Additiv enthält, gemäß dem diesbezüglichen unabhängigen Anspruch.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei nachfolgenden Werte-, Zahlen- und Bereichsangaben die angegebenen Werte bzw. Bereiche nicht beschränkend zu verstehen sind; es versteht sich für den Fachmann, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass alle im Folgenden genannten Werte bzw. Parameterangaben oder dergleichen grundsätzlich mit genormten oder explizit angegebenen Bestimmungsverfahren oder aber mit dem Fachmann an sich geläufigen Bestimmungsmethoden bestimmt bzw. ermittelt werden können.

Dies vorausgeschickt wird im Folgenden die vorliegende Erfindung näher beschrieben.

Gegenstand der vorliegenden Erfindung ist somit - gemäß einem **ersten** Aspekt der vorliegenden Erfindung - ein Verfahren zur Anbringung einer Kante, insbesondere Kunststoffkante, auf einen Werkstoff, insbesondere ein Verfahren zur Anbringung eines Kantenbands (Kantenstreifens) auf mindestens eine Schmalfläche (Schmalseite) eines insbesondere plattenförmigen Werkstoffteils (Werkstücks), mittels Fügen und/oder mittels Verkleben, wobei
(a) zunächst das Kantenband auf seiner mit dem Werkstoff, insbesondere Werkstoffteil, zu verbindenden Seite mit einer mittels Laserstrahlung aktivierbaren (laseraktivierbaren) Klebstoffschicht (Kunststoffschicht) beaufschlagt und/oder versehen wird, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten wird, und
(b) nachfolgend das auf diese Weise mit der mittels Laserstrahlung aktivierbaren Klebstoffschicht beaufschlagte und/oder versehene Kantenband unter Einwirkung von Laserstrahlung auf mindestens eine Schmalfläche des Werkstoffteils angebracht wird, insbesondere dauerhaft mit mindestens einer Schmalfläche des Werkstoffteils verbunden und/oder verklebt wird.

In vollkommen überraschender Weise hat die Anmelderin nämlich gefunden, dass die zuvor geschilderten Probleme des Standes der Technik durch Nachbeschichtung der Kantenbänder ausgehend von Dispersionen oder Lösungen der Klebstoffpolymere einerseits sowie den Einsatz von Laserstrahlung absorbierenden Additiven zur Aktivierung der Klebstoffschicht mittels Einwirkung von Laserstrahlung andererseits in eindrucksvoller Weise gelöst werden können.

Wie zuvor geschildert, erfolgt die Anbringung der Kante, insbesondere Kunststoffkante, bzw. des Kantenbands auf den Werkstoff im Rahmen des erfindungsgemäßen Verfahrens mittels Fügen bzw. Verkleben. Unter dem Begriff des Fügens bzw. Verklebens werden im Rahmen der vorliegenden Erfindung insbesondere solche Methoden verstanden, welche den Zusammenhalt von zuvor separat vorliegenden Werkstücken (hier: Kante bzw. Kantenband einerseits und Werkstoff andererseits) ermöglichen, was wiederum in einem neuen Werkstück mit veränderter geometrischer Form (hier: Werkstoff mit angebrachter Kante bzw. Kantenband) resultiert. Im Besonderen werden erfindungsgemäß unter dem Begriff des Fügens stoffschlüssige Fügeverfahren verstanden, insbesondere Klebeverfahren.

Wie gleichermaßen zuvor beschrieben, wird im Rahmen des erfindungsgemäßen Verfahrens die Kante, insbesondere Kunststoffkante, bzw. das Kantenband mit einer mittels Laserstrahlung aktivierbaren bzw. laseraktivierten Klebstoffschicht ausgerüstet. Im Rahmen der vorliegenden Erfindung wird unter einer mittels Laserstrahlung aktivierbaren bzw. laseraktivierbaren Klebstoffschicht eine Schicht aus bzw. mit mindestens einem Klebstoff (Polymer) verstanden, welche durch Absorption von mittels Laserstrahlung emittierter Energie mit nachfolgender Umwandlung der absorbierten Energie in Wärmeenergie aufgeschmolzen bzw. (re)aktiviert werden kann. Durch Umwandlung der absorbierten Energie in Wärmeenergie wird die Klebstoffschicht im Allgemeinen auf Temperaturen oberhalb ihres Erweichungs- bzw. Schmelzpunktes oder Schmelzbereichs erwärmt, so dass sie in einen klebefähigen bzw. klebrigen Zustand versetzt wird. Vorteilhafterweise erfolgt der Aktivierungs- bzw. Erwärmungsvorgang der Klebstoffschicht unmittelbar vor und/oder während dem Fügen bzw. Verkleben, damit Klebstoffschicht und Kantenband nicht übermäßig thermisch beansprucht werden.

Die Begriffe "Laser" bzw. "Laserstrahlung" meinen im Rahmen der vorliegenden Erfindung insbesondere eine Lichtverstärkung durch stimulierte Emission von Strahlung, wobei die Verstärkung durch ein Lasermedium, welches als Festkörper, als Halbleiter, als Gas oder als Flüssigkeit vorliegen kann, erreicht wird. Die Wellenlängen von Laserstrahlung sind äußerst variabel und umfassen ein Spektrum von Mikrowellenstrahlung bis hin zu Röntgenstrahlung. Bei Einsatz von Laserstrahlung im Rahmen von Füge- bzw. Klebeverfahren wird im Allgemeinen die Laserstrahlung mittels eines Lasermediums fokussiert auf die zu fügende bzw. zu verklebende Oberfläche aufgebracht, was zu einer hohen Energiekonzentration in diesem Bereich führt. Durch Absorption und Umwandlung der mittels Laser eingebrachten Energie durch laseraktivierbare Additive wird an der Oberfläche der Klebstoffschicht ein schneller Anstieg der Temperatur auch über die Erweichungstemperatur des Klebstoffs hinaus erzielt, so dass - wie zuvor erwähnt - der Klebstoff in einen klebfähigen bzw. adhäsiven bzw. verklebungsfähigen Zustand übergeht.

Mit anderen Worten soll somit unter dem Begriff der Laseraktivierung im Rahmen der vorliegenden Erfindung insbesondere verstanden werden, dass die Klebstoffschicht bzw. die laseraktivierbaren Additive der Klebstoffschicht imstande sind, die Energie, welche bei der Einwirkung von Laserstrahlung auf die Klebstoffschicht frei wird, zu absorbieren und in Wärmeenergie umzuwandeln, um auf diese Art und Weise die Verklebung mit dem Werkstoff zu ermöglichen.

Das erfindungsgemäße Verfahren besitzt eine Reihe von Vorteilen und Besonderheiten, welche es gegenüber den Verfahren des Standes der Technik auszeichnen:
Im Rahmen der vorliegenden Erfindung wird erstmals ein Verfahren realisiert, welches die Erzeugung qualitativ hochwertiger Klebeverbindungen, wie sie üblicherweise nur mit Koextrusionsverfahren erzielt werden können, in gegenüber der Koextrusion technisch vereinfachten und somit auch kostengünstigeren Nachbeschichtungsverfahren, insbesondere Offline-Prozessen, erlaubt.

Das erfindungsgemäße Verfahren ist insbesondere dahingehend kostengünstig, als der apparative Aufwand bzw. die apparative Anpassung deutlich geringer ausfällt als bei den aus dem Stand der Technik bekannten Koextrusionsverfahren. Somit lohnt sich der Einsatz des erfindungsgemäßen Verfahrens auch bei kleineren Losgrößen bzw. kleineren Chargen, wohingegen die Koextrusion lediglich bei großtechnischem Einsatz mit hohen Stückzahlen ökonomisch sinnvoll ist.

Weiterhin ist es auch möglich, aufgrund der vorgesehenen Trennung der Schritte von Beschichtung mit der Klebstoffschicht einerseits sowie Fügeverfahren andererseits eine individuelle Anpassung von Kantenband, Werkstoff und Klebstoff vorzunehmen. Dies ist oftmals in Bezug auf Dekor und die optische Ausgestaltung der Endprodukte relevant.

Darüber hinaus erlaubt die erfindungsgemäße Nachbeschichtung der Kantenbänder ausgehend von Dispersionen bzw. Lösungen den Einsatz von Polymeren mit hohem Molekulargewicht einerseits und geringem Schmelzindex andererseits. Derartige Polymere führen zu stabileren Klebeverbindungen als die bislang eingesetzten Hotmelts, konnten bislang allerdings nur im Rahmen der kostenintensiven bzw. technisch aufwendigen und weniger flexiblen Koextrusion verarbeitet werden.

Zudem ermöglicht insbesondere die Aufbringung des Klebstoffpolymers ausgehend von Dispersionen bzw. Lösungen weiterhin den Einsatz besonders geringer Klebstoffmengen und einen homogenen Auftrag (z. B. durch Sprühen, Düsen, Rakeln, Walzen etc.), was in vielerlei Hinsicht vorteilhaft ist: Auf diese Weise kann verhindert werden, dass der Klebstoff aus der Klebefuge überquillt und eine aufwendige Vor- bzw. Nachbehandlung des Werkstücks bzw. eine Säuberung der Maschine erforderlich macht. Darüber hinaus können durch den geringeren Klebstoffeinsatz auch dünnere Klebefugen erzielt werden, welche auch als sogenannte "Nullfuge" bezeichnet werden und mit bloßem Auge nicht sichtbar sind.

Weiterhin wird durch den Dispersions- bzw. Lösungsauftrag eine äußerst gleichmäßige Verteilung der laseraktivierbaren Additive, insbesondere Pigmente, erzielt, was wiederum eine hervorragende Steuerbarkeit der Erwärmung bewirkt, so dass ausschließlich die Klebstoffschicht, nicht jedoch das Kantenband, erwärmt wird. Darüber hinaus bewirkt die homogene Verteilung der Additive in der Klebstoffschicht, dass die Verklebung vollflächig erfolgt, d. h. es resultieren keine Bereiche, welche nur schwächer oder unter Umständen gar nicht verklebt werden. Eine unvollständige Verklebung würde dagegen die Stabilität der Klebeverbindung negativ beeinträchtigen.

Die zuvor genannten Vorteile sind insbesondere auf die erfindungsgemäße Kombination der Aufbringung der Klebstoffpolymere aus Dispersionen oder Lösungen im Rahmen einer Nachbeschichtung des Kantenbandes einerseits sowie des Einsatzes von laseraktivierbaren Additiven, insbesondere Pigmenten, andererseits in Verbindung mit den übrigen erfindungsgemäßen Maßnahmen zurückzuführen.

Im Zusammenhang mit den zuvor beschriebenen Vorteilen und Besonderheiten wird bereits an dieser Stelle auch auf die von der Anmelderin durchgeführten Ausführungsbeispiele verwiesen, welche die vorgenannten Effekte in eindrucksvoller Weise belegen und nachfolgend noch detailliert beschrieben sind.

Die vorliegende Erfindung kann in vielfältiger Weise ausgestaltet sein, wobei bevorzugte Ausführungsformen nachfolgend zum besseren Verständnis ausführlich geschildert sind.

Im Allgemeinen kann bei der Durchführung des erfindungsgemäßen Verfahrens als Kante, insbesondere Kantenband, ein Kantenband aus einem thermoplastischen oder duroplastischen Kunststoff oder aus Holz oder aus Papier oder Pappe oder aus Metallen, insbesondere ein Kantenband aus einem thermoplastischen oder duroplastischen Kunststoff, vorzugsweise ein Kantenband aus einem thermoplastischen Kunststoff, eingesetzt werden.

Als erfindungsgemäß besonders gut geeignete Materialien für den Einsatz als Kunststoffkante, insbesondere Kantenband, haben sich (i) Polyolefine, bevorzugt Polyethylen (PE) oder Polypropylen (PP); (ii) Polymethacrylate (PMA); (iii) Polymethylmethacrylate (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymere (ABS); (vii) Polyamide (PA), Polycarbonate (PC); (viii) Melamin-Formaldehydharze; (ix) Epoxidharze; (x) Phenolharze oder (xi) Harnstoffharze, erwiesen.

Dabei ist es als besonders vorteilhaft anzusehen, dass mittels des erfindungsgemäßen Verfahrens, insbesondere aufgrund des Polymerauftrags aus der Dispersion oder Lösung sowie der materialschonenden Aktivierung mittels Laserstrahlung, eine deutlich vielfältigere Auswahl der eingesetzten Materialien zur Bereitstellung der Kanten, insbesondere Kunststoffkanten, bzw. Kantenbänder gegeben ist. Im Rahmen der vorliegenden Erfindung ist es im Gegensatz zu Koextrusionsverfahren möglich, Kantenbänder auch auf Basis von Holz, Metallen, z. B. Aluminium, Papier oder Pappe einzusetzen.

Was den Werkstoff als solchen anbelangt, so ist es erfindungsgemäß üblicherweise vorgesehen, dass als Werkstoff, insbesondere als plattenförmiges Werkstoffteil, Holz, Holzersatzstoffe, Kunststoffe, Metalle oder Glas, vorzugsweise Holz oder Holzersatzstoffe, eingesetzt werden.

Unter dem Begriff der Holzersatzstoffe werden im Rahmen des erfindungsgemäßen Verfahrens insbesondere Holzfaserwerkstoffe verstanden. Üblicherweise handelt es sich bei Holzfaserwerkstoffen um solche Werkstoffe, welche Holzfasern als Bestandteil enthalten, wie beispielsweise Spanplatten, MDF-Platten (*Medium-Density-Fiber-Boards* bzw. mitteldichte Faserplatten) oder OSB-Platten (*Oriented Strand-Boards* bzw. Grobspanplatten). Es kann jedoch auch vorgesehen sein, dass Holzersatzstoffe auf Basis von Kunststoffen eingesetzt werden, wobei alle Kunststoffe, welche auch im Zusammenhang mit den Kantenbändern genannt werden, in Betracht kommen.

Zur Vorbereitung der Oberfläche der Kante für den Klebstoff bzw. die Klebstoffschicht, insbesondere zur Erhöhung der Adhäsion bzw. Haftung, ist es erfindungsgemäß bevorzugt, wenn die Kante, insbesondere das Kantenband, vor Beaufschlagung mit der Dispersion oder Lösung des Klebstoffpolymers mit einem Haftvermittler (Primer) versehen und/oder beschichtet wird. Alternativ kann es stattdessen aber auch vorgesehen sein, die Kante, insbesondere Kunststoffkante, einer Oberflächenbehandlung und/oder Oberflächenaktivierung, vorzugsweise mittels Coronabehandlung oder Plasmabehandlung, zu unterziehen.

Die Oberfläche der Kante, insbesondere Kunststoffkante, kann somit durch den Einsatz von zwei verschiedenen alternativen Verfahren (d. h. Haftvermittlerauftrag oder Vorbehandlung) auf den Klebstoff vorbereitet werden, insbesondere zur Verbesserung der Affinität des Klebstoffs zur Kante bzw. zum Kantenband.

Was den Haftvermittler als solchen anbelangt, so wird dieser vorzugsweise aus der Gruppe von Polymerlösungen oder Polymerdispersionen, insbesondere lösemittelhaltigen oder vorzugsweise wässrigen Polymerdispersionen, vorzugsweise Polyurethan(PU)-Dispersionsklebstoffen, ausgewählt. Gemäß einer besonders bevorzugten Ausführungsform können gleichermaßen als Haftvermittler vorzugsweise wässrige Polymerdispersionen eingesetzt werden, welche insbesondere aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen, ausgewählt sind. Besonders bevorzugt wird im Rahmen des erfindungsgemäßen Verfahrens als Haftvermittler eine wässrige Polymerdispersion auf Basis einer insbesondere wässrig basierten Polyurethandispersion eingesetzt.

Was die in Verfahrensschritt (a) eingesetzte Dispersion oder Lösung des Klebstoffpolymers anbelangt, so kann diese in vielfältiger Art und Weise ausgestaltet sein.

So ist es im Rahmen des erfindungsgemäßen Verfahrens möglich, dass die in Verfahrensschritt (a) eingesetzte Dispersion oder Lösung des Klebstoffpolymers wässrig-basiert oder organisch-basiert, vorzugsweise wässrig-basiert, ausgebildet ist.

Der Auftrag der Klebstoffpolymere ausgehend von Lösungen oder Dispersionen ermöglicht erstmals die Erzeugung qualitativ hochwertiger Klebeverbindungen, wie sie üblicherweise im Stand der Technik ausschließlich mittels Koextrusion erzielt werden, und dies oftmals auch im Rahmen von Nachbeschichtungen, insbesondere Offline-Prozessen, da ein derartiger Auftrag auch den Einsatz von sonst nur mittels Koextrusion verarbeitbaren Polymeren, insbesondere Polymeren mit hohen Molekulargewichten und/oder geringen Schmelzindizes, erlaubt.

Was das Klebstoffpolymer als solches anbelangt, so wird dieses vorzugsweise aus Homo- und Copolymeren ausgewählt. Insbesondere wird das Klebstoffpolymer aus der Gruppe von (i) Polyurethanen; (ii) Polyacrylaten und Polymethacrylaten; (iii) Ethylenvinylacetaten; (iv) Polyvinylacetaten sowie deren Mischungen und Kombinationen ausgewählt.

Gemäß einer besonders bevorzugten Ausführungsform der vorliegenden Erfindung kann es vorgesehen sein, dass das Klebstoffpolymer ein mittleres Molekulargewicht, insbesondere gewichtsmittleres Molekulargewicht (Mw), von mindestens 70.000 g/mol, insbesondere mindestens 85.000 g/mol, vorzugsweise mindestens 100.000 g/mol, aufweist.

Insbesondere kann es vorgesehen sein, dass das Klebstoffpolymer ein mittleres Molekulargewicht, insbesondere gewichtsmittleres Molekulargewicht (Mw), im Bereich von 70.000 g/mol bis 10.000.000 g/mol, insbesondere im Bereich von 85.000 g/mol bis 5.000.000 g/mol, vorzugsweise im Bereich von 100.000 g/mol bis 3.000.000 g/mol, bevorzugt im Bereich von 150.000 g/mol bis 2.000.000 g/mol, besonders bevorzugt im Bereich von 175.000 g/mol bis 1.500.000 g/mol, ganz besonders bevorzugt im Bereich von 200.000 g/mol bis 1.000.000 g/mol, aufweist.

Insbesondere kann es gemäß einer bevorzugten Ausführungsform der vorliegenden Erfindung weiterhin vorgesehen sein, dass das Klebstoffpolymer bei einer Temperatur von 190 °C und einer Last von 2,16 kg einen Schmelzindex (d. h. synonym auch als Schmelzfließindex bzw. Schmelzflussindex bzw. Schmelze-Massefließrate bzw. MFR bezeichnet), insbesondere bestimmt nach ISO 1133, von höchstens 50 g/10 min, insbesondere höchstens 30 g/10 min, vorzugsweise höchstens 25 g/10 min, aufweist. Insbesondere ist es in diesem Zusammenhang bevorzugt, wenn das Klebstoffpolymer bei einer Temperatur von 190 °C und einer Last von 2,16 kg einen Schmelzindex, insbesondere bestimmt nach ISO 1133, im Bereich von 0,01 g/10 min bis 50 g/10 min, insbesondere im Bereich von 0,1 g/10 min bis 30 g/10 min, vorzugsweise im Bereich von 0,2 g/10 min bis 25 g/10 min, bevorzugt im Bereich von 0,3 g/10 min bis 20 g/10 min, aufweist.

Der Schmelzindex (synonym auch als Schmelzfließindex bzw. Schmelzflussindex bzw. Schmelze-Massefließrate bzw. MFR bezeichnet) dient insbesondere zur Charakterisierung des Fließverhaltens von Thermoplasten bei definierten Druck- und Temperaturbedingungen. Dieser Parameter dient insbesondere als Maß der Viskosität der Kunststoff- bzw. Klebstoffschmelze. Nach ISO 1133 : 2005 erfolgt die Bestimmung des Schmelzindexes insbesondere mittels Kapillarrheometer.

Durch den Einsatz von Klebstoffpolymeren mit den vorgenannten Molekulargewichten einerseits und/oder mit einem Schmelzindex im zuvor beschriebenen Bereich andererseits lassen sich besonders stabile und hochwertige Klebeverbindungen in Bezug auf die Anbringung von Kantenbändern an Werkstoffteilen erzielen. Die Verarbeitung derartiger Polymere war bislang ausschließlich im Rahmen von kostenintensiven und technisch aufwendigen Koextrusionsverfahren möglich. In den aus ökonomischer und technischer Hinsicht vorteilhaften Nachbeschichtungs- bzw. Offline-Prozessen konnten bislang im Allgemeinen nur Schmelzklebstoffe auf Basis von Polymeren mit geringeren Molekulargewichten und höheren Schmelzindizes verwendet werden, was allerdings in deutlich schlechteren Klebeeigenschaften resultiert. Der Einsatz derartiger Polymere auch in Nachbeschichtungsverfahren (insbesondere auch in Offline-Prozessen) ist somit erstmals im Rahmen des erfindungsgemäßen Verfahrens gelungen, insbesondere aufgrund der in vollkommen überraschender Weise realisierten Aufbringung der Polymere ausgehend von Dispersionen bzw. Lösungen.

Was die Menge des eingesetzten Klebstoffpolymers anbelangt, so kann diese Menge in weiten Bereichen variieren: Im Rahmen der vorliegenden Erfindung ist es bevorzugt, wenn die in Verfahrensschritt (a) eingesetzte Dispersion oder Lösung das Klebstoffpolymer in einer Menge im Bereich von 5 bis 90 Gew.-%, insbesondere 10 bis 80 Gew.-%, vorzugsweise 15 bis 70 Gew.-%, bevorzugt 17,5 bis 65 Gew.-%, besonders bevorzugt 20 bis 60 Gew.-%, ganz besonders bevorzugt 25 bis 55 Gew.-%, bezogen auf die Dispersion oder Lösung, aufweist.

Um zu ermöglichen, dass die Klebstoffschicht nach der Trocknung zu einem beliebigen Zeitpunkt zur Durchführung der Fügung bzw. Verklebung des Kantenbandes an den Werkstoff mittels der Einwirkung von Laserstrahlung aufgeschmolzen werden kann, ist es - wie zuvor beschrieben - vorgesehen, dass die Dispersion oder Lösung des Klebstoffpolymers bzw. die Klebstoffschicht zudem mindestens ein Laserstrahlung absorbierendes Additiv aufweist.

In diesem Zusammenhang ist es bevorzugt, wenn das Laserstrahlung absorbierende Additiv, insbesondere Pigment, energieabsorbierend und/oder wärmeleitend, insbesondere reversibel energieabsorbierend und wärmeleitend, ausgebildet ist. Wie zuvor bereits im Zusammenhang mit der Laseraktivierung beschrieben, ist das Laserstrahlung absorbierende Additiv imstande, die durch die Lasereinstrahlung eingetragene Energie zu absorbieren und in Wärmeenergie umzuwandeln. Die dabei entstehende Wärmenergie wird schließlich an die Umgebung - d. h. unmittelbar an die Klebstoffschicht - abgegeben, so dass diese auf Temperaturen oberhalb ihres Erweichungs- oder Schmelzpunktes bzw. Schmelzbereichs erwärmt wird und durch das Aufschmelzen in einen klebefähigen bzw. klebrigen Zustand versetzt wird.

Was das Laserstrahlung absorbierende Additiv im Speziellen anbelangt, so ist es erfindungsgemäß bevorzugt, wenn dieses einzelne und/oder diskrete Partikel umfasst bzw. hieraus besteht. Dabei kann es insbesondere vorgesehen sein, dass die einzelnen und/oder diskreten Partikel einen mittleren (Teilchen-)Durchmesser, berechnet als D50-Wert, im Bereich von 0,001 bis 1.000 µm, insbesondere 0,01 bis 500 µm, vorzugsweise 0,05 bis 200 µm, bevorzugt 0,1 bis 150 µm, besonders bevorzugt 0,2 bis 100 µm, aufweisen.

Darüber hinaus ist es gemäß einer besonders bevorzugten Ausführungsform der vorliegenden Erfindung möglich, dass das Laserstrahlung absorbierende Additiv, insbesondere Pigment, kornförmig bzw. partikelförmig und bevorzugt sphärisch ausgebildet ist.

Was die chemischen Eigenschaften des Laserstrahlung absorbierenden Additivs anbelangt, so ist es erfindungsgemäß bevorzugt, wenn das Laserstrahlung absorbierende Additiv, insbesondere Pigment, anorganisch basiert und/oder mineralisch basiert ausgebildet ist.

In diesem Zusammenhang kann es erfindungsgemäß vorgesehen sein, dass das Laserstrahlung absorbierende Additiv, insbesondere Pigment, auf Basis von Metallen und anorganischen Metallverbindungen, insbesondere Metalloxiden, Metallhydroxiden, Metallsilikaten, Metallaluminaten, Metallphosphaten, Metallsulfaten sowie deren Kombinationen und Mischungen, ausgebildet ist. Dabei sind als Metalle insbesondere Titan, Silicium, Aluminium, Zinn, Eisen, Kupfer und/oder Antimon sowie deren Kombinationen bevorzugt.

Weiterhin kann es erfindungsgemäß ebenfalls vorgesehen sein, dass das Laserstrahlung absorbierende Additiv einen Träger aufweist. Dabei ist es bevorzugt, wenn der Träger als vorzugsweise sphärischer Kern, welcher von einer äußeren Beschichtung oder Hülle umgeben ist, ausgebildet ist. Darüber hinaus kann es vorgesehen sein, dass der Träger vollständig oder teilweise beschichtet ist und/oder dass der Träger Agglomerate, insbesondere an der Oberfläche des Trägers, aufweist und/oder hiermit vollständig oder teilweise beschichtet ist. Im Zusammenhang mit Laserstrahlung absorbierenden Additiven, welche einen Träger aufweisen, ist es üblicherweise vorgesehen, dass der Träger auf Basis von Metallen, anorganischen Metallverbindungen oder organischen Polymeren, insbesondere Metalloxiden, Metallhydroxiden, Metallsilikaten, Metallaluminaten, Metallphosphaten, Metallsulfaten sowie deren Kombinationen und Mischungen, vorzugsweise Silikaten, insbesondere Schichtsilikaten, Glimmer, Magnesiumsilikaten, Aluminiumsilikaten, Alkalialuminiumsilikaten, Erdalkalialuminiumsilikaten und deren Kombinationen, Siliziumoxiden, Glaskugeln, Glashohlkugeln, Nylon, Polyacrylaten, Aluminiumoxiden sowie deren Kombinationen, ausgebildet ist. Was die Beschichtung derartiger Trägermaterialien anbelangt, so ist es im Rahmen der vorliegenden Erfindung bevorzugt, wenn die (äußere) Beschichtung und/oder Hülle und/oder die Agglomerate auf Basis von anorganischen Oxiden, Hydroxiden, Sulfaten, Silikaten, Phosphaten, Aluminaten, Cyanoferraten sowie deren Mischungen und Kombinationen, vorzugsweise auf Basis Titandioxid, Siliciumdioxid, Zinnoxid, Eisenoxid, Kupferhydroxidphosphat, Kupferphosphat, Antimonoxid sowie deren Kombinationen und Mischungen, ausgebildet sind.

Zur Durchführung des erfindungsgemäßen Verfahrens geeignete Laseradditive sind beispielsweise offenbart in den Druckschriften DE 10 2010 004 743 A1 bzw. WO 2011/085779 A1, DE 10 2009 051 171 A1 bzw. US 2011/104220 A1, DE 10 2004 051 246 A1 bzw. WO 2006/042623 A1 bzw. US 2008/004363 A1 sowie DE 10 2009 056 093 A1 bzw. WO 2010/105735 A1 bzw. US 2012/010345 A1, deren diesbezüglicher Inhalt hiermit durch Bezugnahme vollumfänglich eingeschlossen ist. Beispiele für handelsübliche Laseradditive, welche für das erfindungsgemäße Verfahren geeignet sind, sind z. B. die von der Merck KGaA, Darmstadt, Deutschland, vertriebenen Produkte bzw. Laseradditive insbesondere der Serien Lazerflair^{®} und Iriotec^{®}, insbesondere Lazerflair^{®} 820 bzw. Iriotec^{®}8820. Was die eingesetzte Menge des Laserstrahlung absorbierenden Additivs anbelangt, so ist auch diese variabel. Im Rahmen der vorliegenden Erfindung ist es üblicherweise vorgesehen, dass die in Verfahrensschritt (a) eingesetzte Dispersion oder Lösung das Laserstrahlung absorbierende Additiv, insbesondere Pigment, in einer Menge im Bereich von 0,001 bis 10 Gew.-%, insbesondere im Bereich von 0,01 bis 7,5 Gew.-%, vorzugsweise im Bereich von 0,01 bis 5 Gew.-%, bevorzugt im Bereich von 0,05 bis 4,5 Gew.-%, besonders bevorzugt im Bereich von 0,1 bis 4 Gew.-%, ganz besonders bevorzugt im Bereich von 0,5 bis 3,5 Gew.-%, bezogen auf die Dispersion oder Lösung, aufweist.

Um die Kantenbänder mit besonders gleichmäßig dicken Klebstoffschichten zu versehen, kann es im Rahmen der vorliegenden Erfindung zudem vorgesehen sein, dass die in Verfahrensschritt (a) eingesetzte Dispersion oder Lösung außerdem mindestens ein Filmbildungshilfsmittel und/oder mindestens einen Filmbildner enthält. Dabei ist es besonders bevorzugt, das Filmbildungshilfsmittel bzw. den Filmbildner in Mengen im Bereich von 0,001 bis 6 Gew.-%, insbesondere im Bereich von 0,01 bis 5 Gew.-%, vorzugsweise im Bereich von 0,01 bis 4 Gew.-%, bevorzugt im Bereich von 0,05 bis 3,5 Gew.-%, besonders bevorzugt im Bereich von 0,1 bis 3 Gew.-%, bezogen auf die Dispersion oder Lösung, einzusetzen. Durch den Einsatz eines Filmbildungshilfsmittels bzw. Filmbildners wird ermöglicht, dass eine flächendeckende Verfilmung der Oberfläche des Kantenbandes mit der Dispersion bzw. Lösung des Klebstoffpolymers erfolgt. Auf diese Weise wird eine besonders stabile und homogene Verklebung sichergestellt, da die Oberfläche des Kantenbandes vollflächig mit der Klebstoffdispersion bedeckt ist. Geeignete Filmbildner bzw. Filmbildungshilfsmittel für den Einsatz in den Dispersionen bzw. Lösungen sind dem Fachmann an sich bekannt; so ist es beispielsweise möglich, handelsübliche Filmbildner, wie Propylencarbonat oder Butyldiglykolacetat, einzusetzen.

Darüber hinaus kann es erfindungsgemäß vorgesehen sein, dass die in Verfahrensschritt (a) eingesetzte Dispersion oder Lösung außerdem mindestens ein weiteres Additiv und/oder mindestens einen weiteren Hilfsstoff enthält. Das weitere Additiv bzw. der weitere Hilfsstoff kann insbesondere aus der Gruppe von Dispergierhilfsmitteln, Emulgatoren, Füllstoffen, Entschäumern, Farbstoffen, Färbemitteln, Vergilbungsinhibitoren, Antioxidationsmitteln, Stabilisatoren, Konservierungsmitteln, UV-Absorbern, UV-Stabilisatoren, Verlaufsmitteln, Rheologiemodifikatoren, Viskositätsregulatoren, Verdickungsmitteln, pH-Stellmitteln, Schutzkolloiden sowie deren Mischungen und Kombinationen ausgewählt werden.

Der Einsatz der vorgenannten Additive und Hilfsstoffe sowie gegebenenfalls weiterer, an dieser Stelle nicht ausdrücklich erwähnter üblicher Additive, ist dem Fachmann an sich bekannt. Auch die Bestimmung der erforderlichen einzusetzenden Mengen liegt im üblichen Handeln des Fachmanns.

Die Aufbringung der Dispersion oder Lösung des Klebstoffpolymers erfolgt ebenfalls durch dem Fachmann als solche wohlbekannte technische Verfahren. So ist es im Rahmen der vorliegenden Erfindung besonders bevorzugt, wenn in Verfahrensschritt (a) zum Erhalt einer mittels Laserstrahlung aktivierbaren Kunststoffschicht das Kantenband mit der Dispersion oder Lösung des Klebstoffpolymers durch Beschichtungsverfahren, insbesondere durch thermisches, chemisches, mechanisches oder thermomechanisches Beschichten, vorzugsweise durch Rakeln, Walzen, Sprühauftrag, Düsen, Spritzen oder Plastifizieren, beaufschlagt und/oder versehen wird.

Das erfindungsgemäße Verfahren zeichnet sich zudem unter anderem dadurch aus, dass nur verhältnismäßig geringe Mengen des Klebstoffpolymers für eine stabile Verklebung notwendig sind. So ist es im Rahmen des erfindungsgemäßen Verfahrens üblicherweise vorgesehen, dass in Verfahrensschritt (a) die Dispersion oder Lösung des Klebstoffpolymers in einer Auftragsmenge von höchstens 300 g/m², insbesondere höchstens 200 g/m², vorzugsweise höchstens 150 g/m², aufgetragen wird. Insbesondere kann es vorgesehen sein, in Verfahrensschritt (a) die Dispersion oder Lösung des Klebstoffpolymers in einer Auftragsmenge im Bereich von 1 bis 300 g/m², insbesondere im Bereich von 5 bis 200 g/m², bevorzugt im Bereich von 10 bis 150 g/m², aufzutragen. Wie zuvor bereits geschildert, ist der Einsatz der Dispersion bzw. Lösung des Klebstoffpolymers in den vorgenannten Auftragsmengen mit zahlreichen Vorteilen verbunden. Insbesondere wird auf diese Weise ein Herausquellen des Klebstoffpolymers aus der Fuge verhindert. Weiterhin führt der Einsatz von geringen Klebstoffmengen auch zu geringeren Dicken der Klebstofffuge, wodurch insbesondere eine Verbesserung der Optik, aber darüber hinaus auch der Haltbarkeit der resultierenden Klebeverbindung erzielt wird. Dennoch genügen die vorgenannten Auftragsmengen für eine zuverlässige und stabile Verklebung.

Was konkret die Verfahrensführung anbelangt, so kann es vorgesehen sein, dass Verfahrensschritt (a) kontinuierlich, insbesondere als Durchlaufverfahren, oder aber stationär, vorzugsweise als Durchlaufverfahren, betrieben wird.

Im Rahmen der vorliegenden Erfindung ist unter einem Durchlaufverfahren insbesondere ein Verfahren für den maschinellen Durchlauf zu verstehen. Dabei werden die Kanten, insbesondere Kunststoffkanten, bzw. Kantenbänder, in einem kontinuierlichen Fluss, beispielsweise mit einem Förderband oder einer Fließbandeinrichtung, zu der Beschichtungseinrichtung transportiert, dort mit der Dispersion bzw. Lösung des Klebstoffpolymers versehen und verlassen schließlich die Einrichtung in einem kontinuierlichen Fluss von mit der Klebstoffschicht versehenen Kantenbändern.

Im Gegensatz hierzu wird ein stationäres Verfahren an einer im Allgemeinen mobilen Bearbeitungseinrichtung durchgeführt. Hierzu werden die Kantenbänder einzeln zu der Bearbeitungsstation transportiert, dort beschichtet bzw. mit der Kunststoffschicht bzw. Klebstoffschicht versehen und anschließend einzeln wieder abtransportiert.

Nach einer bevorzugten Ausführungsform wird Verfahrensschritt (a) des erfindungsgemäßen Verfahrens als Durchlaufverfahren betrieben, vorzugsweise in kontinuierlichem Betrieb.

Der Vorschub, mit dem Verfahrensschritt (a) des erfindungsgemäßen Verfahrens durchgeführt wird, kann im Rahmen der vorliegenden Erfindung in weiten Bereichen variieren. Im Allgemeinen wird Verfahrensschritt (a) als Durchlaufverfahren mit einem Vorschub von mindestens 1 m/min, insbesondere mindestens 5 m/min, vorzugsweise mindestens 10 m/min, bevorzugt mindestens 15 m/min, besonders bevorzugt mindestens 20 m/min, durchgeführt. Insbesondere kann es vorgesehen sein, dass Verfahrensschritt (a) als Durchlaufverfahren mit einem Vorschub im Bereich von 1 bis 100 m/min, insbesondere im Bereich von 5 bis 75 m/min, vorzugsweise im Bereich von 10 bis 60 m/min, bevorzugt im Bereich von 15 bis 50 m/min, besonders bevorzugt im Bereich von 20 bis 40 m/min, durchgeführt wird.

Weiterhin ist es im Rahmen des erfindungsgemäßen Verfahrens üblich, dass in Verfahrensschritt (a) nach der Beaufschlagung des Kantenbands mit der Dispersion oder Lösung des Klebstoffpolymers das Dispersionsmedium oder Lösemittel entfernt wird. Vorzugsweise erfolgt die Entfernung des Lösemittels bzw. Dispersionsmediums mittels Trocknung und/oder Verdampfen bei Raumtemperatur, insbesondere bei 25 °C, oder bei erhöhten Temperaturen und/oder bei Atmosphärendruck oder reduziertem Druck. Auf diese Weise soll insbesondere eine nichtklebrige bzw. klebefreie, dennoch mittels Laserstrahlung aktivierbare bzw. verklebbare Kunststoffschicht und/oder Klebstoffschicht erhalten werden. In diesem Zusammenhang ist unter den Begriffen "nichtklebrig" bzw. "klebefrei" ein Zustand der Klebstoff- bzw. Kunststoffschicht zu verstehen, welcher vorsieht, dass bei Raumtemperatur (d. h. 25 °C) und Atmosphärendruck keine Haftung bzw. Verklebung erfolgt; erst nach Aktivierung mittels Laserstrahlung soll dagegen die Klebstoffschicht bzw. die Kunststoffschicht ihre adhäsiven bzw. klebrigen bzw. verklebungsfähigen Eigenschaften, welche die Anbringung des Kantenbandes an den Werkstoff erlauben, entwickeln. Vorteilhafterweise ist keine Trennfolie zum Schutz der Klebstoffschicht erforderlich.

Die resultierende getrocknete bzw. lösemittelfreie Kunststoffschicht bzw. Klebstoffschicht weist im Vergleich zum Stand der Technik darüber hinaus geringe Dicken auf. So ist es im Rahmen der vorliegenden Erfindung insbesondere vorgesehen, dass die aus Verfahrensschritt (a) resultierende, mittels Laserstrahlung aktivierbare Kunststoffschicht und/oder Klebstoffschicht eine Dicke von höchstens 200 µm, insbesondere höchstens 150 µm, vorzugsweise höchstens 100 µm, aufweist. Insbesondere ist es erfindungsgemäß bevorzugt, wenn die aus Verfahrensschritt (a) resultierende, mittels Laserstrahlung aktivierbare Kunststoffschicht und/oder Klebstoffschicht eine Dicke im Bereich von 0,1 bis 200 µm, insbesondere im Bereich von 0,5 bis 150 µm, vorzugsweise im Bereich von 1 bis 100 µm, aufweist.

Wie die vorstehenden Dicken zeigen, wird im Rahmen der vorliegenden Erfindung realisiert, dass das resultierende Produkt, d. h. das mit einem Kantenband beaufschlagte Werkstoffteil, nur eine äußerst geringe Fuge aufweist. Neben den verbesserten ästhetischen Aspekten ist eine solche "Nullfuge" auch wesentlich weniger anfällig für das Eindringen von Feuchtigkeit und Schmutz, so dass die Verklebung und damit auch die Werkstücke eine sehr viel höhere Lebensdauer besitzen.

Was die Beschaffenheit der Kunststoff- bzw. Klebstoffschicht weiterhin anbelangt, so ist es üblicherweise vorgesehen, dass die aus Verfahrensschritt (a) resultierende, mittels Laserstrahlung aktivierbare Kunststoffschicht und/oder Klebstoffschicht das Laserstrahlung absorbierende Additiv, insbesondere Pigment, als Inhaltsstoff oder integralen Bestandteil aufweist. In diesem Zusammenhang ist es besonders bevorzugt, wenn das Laserstrahlung absorbierende Additiv, insbesondere Pigment, gleichmäßig und/oder homogen in der Kunststoffschicht und/oder Klebstoffschicht verteilt ist.

Eine gleichmäßige bzw. homogene Verteilung des Laserstrahlung absorbierenden Additivs ist dahingehend zu verstehen, dass in der Klebstoffschicht bzw. Kunststoffschicht die Partikel des Additivs gleichmäßig über die gesamte Fläche der Kunststoffschicht in regelmäßigen Abständen zueinander verteilt sind. Dies ist insbesondere mit dem Vorteil verbunden, dass im resultierenden Produkt (d. h. mit Kantenband versehenem Werkstoffteil) besonders glatte Klebstoffkanten entstehen, welche mit bloßem Auge nicht sichtbar sind, da eine besonders gleichmäßige Haftung zum Werkstoff erzielt wird. Darüber hinaus lässt sich über die gleichmäßige bzw. homogene Verteilung des laseraktivierbaren Additivs die Energieabsorption und somit schließlich die Erwärmung besonders gut steuern bzw. zielgerichtet einsetzen, so dass zumindest im Wesentlichen ausschließlich die Klebstoffschicht, nicht jedoch das Kantenband als solches erwärmt wird. Auch kann durch die gleichmäßige und homogene Verteilung des Additivs eine vollständige Verklebung über die gesamte gemeinsame Fläche von beschichtetem Kantenband und Werkstoffteil erzielt werden. Die gleichmäßige Verteilung der laseraktivierbaren Additive resultiert insbesondere aus dem Dispersions- bzw. Lösungsauftrag und kann insbesondere durch den Einsatz von Filmbildnern noch weiter verstärkt werden.

Insbesondere ist erfindungsgemäß vorgesehen, dass die Kunststoffschicht und/oder Klebstoffschicht das Laserstrahlung absorbierende Additiv, insbesondere Pigment, in Mengen im Bereich von 0,005 bis 30 Gew.-%, insbesondere im Bereich von 0,05 bis 25 Gew.-%, vorzugsweise im Bereich von 0,1 bis 20 Gew.-%, bevorzugt im Bereich von 0,5 bis 15 Gew.-%, besonders bevorzugt im Bereich von 1 bis 10 Gew.-%, bezogen auf die Kunststoffschicht und/oder Klebstoffschicht, enthält. Auf diese Weise wird bei der Verklebung der Kante bzw. des Kantenbands eine gute Wärmeaktivierung und somit eine zuverlässige Verklebung ermöglicht.

Im Rahmen der vorliegenden Erfindung ist es üblicherweise vorgesehen, dass die Kante, insbesondere das Kantenband, einerseits und die mittels Laserstrahlung aktivierbare Klebstoffschicht andererseits vor dem Fügevorgang, insbesondere vor Anbringung der Kante, insbesondere Kunststoffkante, auf den Werkstoff, dauerhaft und/oder untrennbar miteinander verbunden werden. Dies erfolgt derart, wie es für Verfahrensschritt (a) zuvor beschrieben worden ist, d. h. durch Dispersionsauftrag bzw. Lösungsauftrag des Klebstoffpolymers mit anschließender Entfernung von Dispersionsmedium bzw. Lösemittel.

Was die weitere Verfahrensführung anbelangt, so ist es im Rahmen des erfindungsgemäßen Verfahrens bevorzugt, wenn in Verfahrensschritt (b) die aus Verfahrensschritt (a) resultierende, mittels Laserstrahlung aktivierbare Klebstoffschicht unter Einwirkung von Laserstrahlung auf dem Kantenband erwärmt, insbesondere zumindest teilweise geschmolzen und/oder in einen klebefähigen bzw. klebrigen Zustand überführt, wird. Dabei kann es insbesondere vorgesehen sein, dass in Verfahrensschritt (b) die Einwirkung von Laserstrahlung ein Erwärmen der Klebstoffschicht auf Temperaturen im Bereich von 50 bis 400 °C, insbesondere 70 bis 300 °C, vorzugsweise 100 bis 250 °C, bewirkt.

Was den Energieeintrag auf die Klebstoff- bzw. Kunststoffschicht im Speziellen anbelangt, so ist es erfindungsgemäß bevorzugt, wenn in Verfahrensschritt (b) die Einwirkung von Laserstrahlung mittels einer Laserquelle, insbesondere eines Halbleiterlasers, Festkörperlasers, Faser-Lasers oder CO₂-Lasers, vorzugsweise Festkörperlasers oder Halbleiterlasers, bevorzugt Nd:YAG-Lasers oder Diodenlasers, durchgeführt wird.

In diesem Zusammenhang hat es sich als besonders vorteilhaft erwiesen, wenn in Verfahrensschritt (b) Laserstrahlung mit einer Wellenlänge im Bereich von 150 nm bis 10,6 µm, insbesondere 250 nm bis 10,6 µm, vorzugsweise 300 nm bis 10,6 µm, bevorzugt 500 nm bis 10,6 µm, eingesetzt wird.

Auch die durch die Einwirkung von Laserstrahlung auf der Klebstoff- bzw. Kunststoffschicht entstehende Energiedichte kann in weiten Bereichen variieren. So ist es erfindungsgemäß üblich, dass in Verfahrensschritt (b) durch die Einwirkung von Laserstrahlung eine Energiedichte im Bereich von 0,1 mJ/cm² bis 50 J/cm², insbesondere 0,2 mJ/cm² bis 30 J/cm², vorzugsweise 0,3 mJ/cm² bis 10 J/cm², erzeugt wird.

Schließlich ist es im Rahmen des erfindungsgemäßen Verfahrens üblicherweise vorgesehen, dass das Anbringen der Kante, insbesondere Kunststoffkante, auf den Werkstoff, insbesondere das Anbringen des Kantenbands auf die Schmalfläche des insbesondere plattenförmigen Werkstoffteils, mittels Fügen, vorzugsweise unter Andrücken und/oder Anpressen, insbesondere in einem Durchlaufverfahren, erfolgt.

Dabei handelt es sich um einen dem Fachmann an sich bekannten Prozess, welcher insbesondere unter Einsatz von Andrück- oder Anpressvorrichtungen, wie beispielsweise Rollen, Walzen und dergleichen, erfolgen kann.

Wie zuvor beschrieben, umfasst das erfindungsgemäße Verfahren die zuvor im Detail geschilderten Verfahrensschritte (a) und (b). Dabei ist es erfindungsgemäß bevorzugt, wenn die Verfahrensschritte (a) und (b) separat bzw. (räumlich) getrennt voneinander durchgeführt werden. In diesem Zusammenhang ist es besonders bevorzugt, wenn ein Offline-Prozess eingesetzt wird.

Die zuvor beschriebene Verfahrensführung ist - wie zuvor bereits angeführt -in vielerlei Hinsicht vorteilhaft. Aufgrund der kostengünstigen Produktion sowie des verhältnismäßig geringen apparativen Aufwands erlaubt das erfindungsgemäße Verfahren auch bei Einsatz von üblicherweise nur mittels Koextrusion verarbeitbaren Polymeren (d. h. Polymeren mit hohen Molekulargewichten und/oder mit geringen Schmelzindizes) eine ökonomische Produktion auch kleiner Chargen bzw. Losgrößen. Darüber hinaus ermöglicht die separate Verfahrensführung (d. h. die nachträgliche Aufbringung der Klebstoff- bzw. Kunststoffschicht auf ein zuvor hergestelltes, d. h. fertig produziertes Kantenband) eine unkomplizierte individuelle Anpassung der eingesetzten Materialien, was insbesondere im Hinblick auf die Optik von Bedeutung ist, um beispielsweise unterschiedliche Farbgebungen der Dekore zu realisieren, aber auch technisch relevant ist im Hinblick auf die Qualität der Verklebung. Darüber hinaus lassen sich die unterschiedlichen Fertigungsstufen durch verschiedene Unternehmen, welche auf den jeweiligen Vorgang spezialisiert sind, ausführen, was insgesamt die Produktionskosten signifikant senkt, da die jeweils spezialisierten Unternehmen ihre bereits vorhandenen Apparaturen weiter einsetzen können.

Alternativ ist es jedoch auch möglich, das Verfahren insgesamt (d. h. die Verfahrensschritte (a) und (b)) als kontinuierliches Verfahren, insbesondere als Durchlaufverfahren, zu betreiben. Dies ist jedoch im Rahmen der vorliegenden Erfindung weniger bevorzugt.

Wie aus den vorstehenden Ausführungen hervorgeht, ist es im Rahmen der vorliegenden Erfindung erstmals gelungen, ein Verfahren zur Anbringung einer Kante, insbesondere Kunststoffkante, auf einen Werkstoff bereitzustellen, welches eine kostengünstige, individuell anpassbare Verfahrensführung, insbesondere einen Offline-Prozess, bei dennoch hervorragenden Klebeverbindungsqualitäten, wie sie bislang nur durch den Einsatz kostenaufwendiger und wenig individuell anpassbarer Koextrusionsverfahren möglich sind, realisiert.

Weiterer Gegenstand der vorliegenden Erfindung - gemäß einem zweiten Aspekt der vorliegenden Erfindung - ist ein Werkstoff, insbesondere ein plattenförmiges Werkstoffteil (Werkstück), wobei mindestens eine Schmalfläche (Schmalseite) des Werkstoffs mit einem Kantenband (Kantenstreifen) versehen ist und wobei der Werkstoff erhältlich ist durch ein Verfahren, wie es zuvor beschrieben wurde.

Die erfindungsgemäße Verfahrensführung schlägt sich nämlich unmittelbar auch in den Endprodukten nieder, d. h. in den Werkstoffen, welche an mindestens einer ihrer Schmalflächen mit dem Kantenband versehen sind. Denn einerseits wird auf die erfindungsgemäße Art und Weise eine besonders dünne, mit dem bloßen Auge nicht sichtbare Klebstoffschicht als Fuge - d. h. eine sogenannte "Nullfuge" - zwischen Werkstoffteil und Kantenband realisiert. Andererseits wird mit einem kostengünstigen Nachbeschichtungsprozess eine Verklebungsgüte erzielt, welche sogar die Qualität der Klebeverbindungen von mittels Koextrusion erzeugten beschichteten Kantenbändern erreicht bzw. sogar übertrifft. Auch die eingesetzten Mengen an Klebstoff und Laseradditiv sowie die Homogenität von deren Verteilung infolge des Auftrags aus der Dispersion oder Lösung unterscheiden die erfindungsgemäßen Produkte von Produkten des Standes der Technik.

Insbesondere betrifft die vorliegende Erfindung gemäß diesem Erfindungsaspekt einen Werkstoff, insbesondere ein plattenförmiges Werkstoffteil (Werkstück), wobei mindestens eine Schmalfläche (Schmalseite) des Werkstoffs mit einem Kantenband (Kantenstreifen) versehen ist, wobei das Kantenband mittels Fügen und/oder mittels Verkleben auf die Schmalfläche aufgebracht und dauerhaft hiermit verbunden ist, wobei das Kantenband vor seiner Aufbringung auf den Werkstoff mit seiner mit dem Werkstoff zu verbindenden Seite mit einer mittels Laserstrahlung aktivierbaren (laseraktivierbaren) Klebstoffschicht (Kunststoffschicht) beaufschlagt und/oder versehen worden ist, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten ist, und wobei das Aufbringen und Verbinden des Kantenbands mit dem Werkstoff unter Einwirkung von Laserstrahlung und unter Andrücken und/oder Anpressen erfolgt ist.

Für weitergehende Einzelheiten zu den erfindungsgemäßen Werkstoffen kann auf die vorangehenden Ausführungen zu dem erfindungsgemäßen Verfahren verwiesen werden, welche im Hinblick auf die erfindungsgemäßen Werkstoffe entsprechend gelten.

Des Weiteren betrifft die vorliegende Erfindung - gemäß einem **dritten** Erfindungsaspekt - die Verwendung eines erfindungsgemäßen Werkstoffs, insbesondere eines plattenförmigen Werkstoffteils (Werkstücks), wie es zuvor beschrieben wurde, zur Herstellung von Möbeln, insbesondere Küchenteilen, und Einrichtungsgegenständen beliebiger Art und/oder in der Holz- und Möbelindustrie.

Für weitergehende Einzelheiten zu der erfindungsgemäßen Verwendung kann auf die vorangehenden Ausführungen zu den obigen Erfindungsaspekten verwiesen werden, welche im Hinblick auf die erfindungsgemäße Verwendung entsprechend gelten.

Ebenfalls Gegenstand der vorliegenden Erfindung - gemäß einem **vierten** Erfindungsaspekt - ist ein Verfahren zur Aufbringung einer mittels Laserstrahlung aktivierbaren (laseraktivierbaren) Klebstoffschicht (Kunststoffschicht) auf mindestens eine Seite eines Kantenbands (Kantenstreifens), insbesondere zu Zwecken der nachfolgenden Anbringung der Kante, insbesondere Kunststoffkante, auf einen Werkstoff mittels Fügen und/oder mittels Verkleben, wobei das Kantenband auf mindestens einer seiner beiden Seiten, insbesondere seiner mit einem Werkstoff zu verbindenden Seite, mit einer mittels Laserstrahlung aktivierbaren (laseraktivierbaren) Klebstoffschicht (Kunststoffschicht) beaufschlagt und/oder versehen wird, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten wird.

Für weitergehende Einzelheiten zu dem erfindungsgemäßen Verfahren zur Aufbringung einer mittels Laserstrahlung aktivierbaren Klebstoffschicht auf mindestens eine Seite eines Kantenbands kann auf die vorangehenden Ausführungen zu den obigen Erfindungsaspekten verwiesen werden, welche im Hinblick auf das zuvor genannte Verfahren entsprechend gelten.

Darüber hinaus ist Gegenstand der vorliegenden Erfindung - gemäß einem **fünften** Aspekt der vorliegenden Erfindung - ein Kantenband (Kantenstreifen bzw. Kante, insbesondere Kunststoffkante), welches auf mindestens einer Seite eine mittels Laserstrahlung aktivierbare (laseraktivierbare) Klebstoffschicht (Kunststoffschicht) aufweist und durch ein Verfahren, wie es zuvor gemäß dem vierten Erfindungsaspekt beschrieben wurde, erhältlich ist.

Insbesondere ist Gegenstand der vorliegenden Erfindung gemäß diesem Erfindungsaspekt ein Kantenband (Kantenstreifen bzw. Kante, insbesondere Kunststoffkante), welches auf mindestens einer Seite mit einer mittels Laserstrahlung aktivierbaren (laseraktivierbaren) Klebstoffschicht (Kunststoffschicht) beaufschlagt und/oder versehen ist, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt ist, erhalten ist.

Für weitergehende Einzelheiten zu den erfindungsgemäßen Kantenbändern gemäß dem fünften Erfindungsaspekt kann auf die vorangehenden Ausführungen zu den obigen Erfindungsaspekten verwiesen werden, welche im Hinblick auf die erfindungsgemäßen Kantenbänder entsprechend gelten.

Zudem ist Gegenstand der vorliegenden Erfindung - gemäß einem **sechsten** Aspekt der vorliegenden Erfindung - die Verwendung einer Zusammensetzung, insbesondere in Form einer Dispersion oder Lösung, welche mindestens ein Klebstoffpolymer und mindestens ein Laserstrahlung absorbierendes Additiv (Laseradditiv), insbesondere Pigment, enthält, zur Ausrüstung und/oder Beaufschlagung eines Kantenbands (Kantenstreifens) mit einer Klebstoffschicht (Kunststoffschicht), insbesondere zu Zwecken der Anbringung der Kante, insbesondere Kunststoffkante, auf einen Werkstoff mittels Fügen und/oder mittels Verkleben.

Für weitergehende Einzelheiten zu der erfindungsgemäßen Verwendung kann auf die vorangehenden Ausführungen zu den obigen Erfindungsaspekten verwiesen werden, welche im Hinblick auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch keinesfalls beschränken.

### Ausführungsbeispiele:

Nachfolgend werden Ausführungsbeispiele der vorliegenden Erfindung zur Anbringung von beschichteten Kantenbändern an plattenförmigen Werkstoffen beschrieben. Dabei wurden erfindungsgemäße Ausführungsformen mit nichterfindungsgemäßen Ausführungsformen, insbesondere unter Berücksichtigung der DIN 204 (September 2001), DIN 205 (Juni 2003) und DIN EN 14257 (September 2006), insbesondere in Bezug auf die Beanspruchungsgruppen D3 und D4, miteinander verglichen.

Als Kantenbänder wurden zur Bereitstellung erfindungsgemäßer und nichterfindungsgemäßer Ausführungsformen jeweils 2,1 cm breite und 3,5 m lange Kantenbänder eingesetzt, welche entsprechend mit einer Klebstoffschicht versehen und nach der Laseraktivierung auf 1,9 cm breite Schmalflächen von Spanplatten bzw. MDF-Platten angebracht wurden. Die Beaufschlagung der Kantenbänder mit der Lösung bzw. Dispersion der Klebstoffpolymere erfolgte durch einen dem Fachmann wohlbekannten Auftrag mittels Schlitzdüsen. Die Aktivierung der Klebstoffschicht wurde unter Einwirkung von Laserstrahlung mit diesbezüglich üblichen Wellenlängen durch den Einsatz eines Dioden-Lasers durchgeführt. Der Fügevorgang erfolgte ebenfalls mit Hilfe dem Fachmann wohlbekannter Andrück- bzw. Anpressverfahren.

Insgesamt wurden fünf verschiedene Versuchsreihen durchgeführt, wobei erfindungsgemäße Ausführungsformen mit (i) unterschiedlichen Mengen des Laserpigments, (ii) unterschiedlichen Mengen des Filmbildners, (iii) unterschiedlichen Klebstoffpolymeren, (iv) unterschiedlich vorbereiteten Oberflächen des Kantenbandes sowie (v) nichterfindungsgemäße Ausführungsformen ohne Laserpigment miteinander verglichen wurden.

Zur Beurteilung der Qualität der Klebeverbindungen zwischen Werkstück und Kantenband wurde die Adhäsion von Kantenband und Werkstück einerseits bei Raumtemperatur (25 °C) und andererseits zur Analyse der Kältebeständigkeit bei +5 °C untersucht. Darüber hinaus wurde im Rahmen eines aufsteigenden Wärmetests bis zu Temperaturen von 120 °C die Wärmebeständigkeit untersucht. Weiterhin wurde im Rahmen eines Wärmelangzeittests über 4 Monate bei 50 °C untersucht, inwieweit sich die Klebeverbindungen unter lang anhaltendem Einfluss hoher Temperaturen in ihren Eigenschaften verändern. Schließlich wurde die Adhäsion der Klebeverbindungen bei Raumtemperatur nach dem Langzeittest untersucht.

Die Untersuchungen der Adhäsion (bei Raumtemperatur, bei +5 °C sowie nach Abschluss des Wärmelangzeittests) erfolgten derart, dass die Versagensart der Klebeverbindung unter Belastung analysiert wurde. Üblicherweise wird bei Versagensarten von Klebstoffverbindungen zwischen Adhäsionsbruch, Kohäsionsbruch im Klebstoff, Kohäsionsbruch im Fügeteilwerkstoff sowie Grenzschichtbrüchen unterschieden.

Ein Adhäsionsbruch ist auf eine zu geringe Haftung zwischen Klebstoffschicht und Werkstoff zurückzuführen, so dass sich der Klebstoff vollständig vom Werkstoff trennt; Adhäsionsbrüche konnten bei keiner Versuchsreihe beobachtet werden. Bei Grenzschichtbrüchen tritt der Bruch direkt an der Phasengrenze zwischen Fügeteiloberfläche und Klebstoffschicht auf; derartige Brüche konnten ebenfalls bei keiner Versuchsreihe beobachtet werden. Kohäsionsbrüche im Klebstoff erfolgen im Allgemeinen bei einer geringeren inneren Festigkeit des Klebstoffes, so dass nach dem Bruch die Fügeteiloberflächen (Kantenband und Werkstoff) mit Klebstoff bedeckt sind. Kohäsionsbrüche im Werkstoff hingegen resultieren, wenn die innere Festigkeit des Klebstoffes höher ist als die des eingesetzten Werkstoffs. Die Klebeverbindung bleibt von der mechanischen Belastung zumindest im Wesentlichen unbeeinträchtigt. Derartige Brüche sind somit als Indikator für besonders stabile Klebeverbindungen zu werten. Bei allen Versuchsreihen traten Kohäsionsbrüche im Klebstoff bzw. Werkstoff sowie deren Mischformen auf. Je höher der Anteil der Brüche im Werkstoff ist, desto stabiler ist folglich auch die Klebeverbindung.

Die Bewertung erfolgte dabei nach dem folgenden Notensystem:

| | | |
|---|---|---|
| **1 - 1,9:** | "sehr gut" | ≤ 100 - 90 % Werkstoffbruch |
| **2 - 2,9:** | "gut" | ≤ 100 - 80 % Werkstoffbruch |
| **3 - 3,9:** | "befriedigend" | ≤ 80 - 60 % Werkstoffbruch |
| **4:** | "ausreichend" | ≤ 60 - 40 % Werkstoffbruch |
| **5:** | "mangelhaft" | ≤ 40 % Werkstoffbruch |
| **6:** | "ungenügend" | ≥ 70 % Klebstoffbruch |

Die Analyse der Wärmebeständigkeiten erfolgte derart, dass die Klebeverbindungen hinsichtlich des Auftretens sichtbarer Veränderungen in Folge der starken bzw. anhaltenden Wärmeeinwirkung untersucht wurden ("k.s.V." = keine sichtbaren Veränderungen).

### (i) Einfluss der Menge an Laserpigment

In der ersten Versuchsreihe, welche ausschließlich erfindungsgemäße Ausführungsformen beinhaltet, wurde der Einfluss der eingesetzten gewichtsbezogenen Menge des Laserpigments, bezogen auf die Dispersion bzw. Lösung, auf die Stabilität der Klebeverbindung untersucht. Die diesbezüglichen Ergebnisse sind der nachfolgenden Tabelle 1 zu entnehmen:

**Tabelle 1: Einfluss der eingesetzten Menge Laserpigment auf die Klebeverbindungen**

| | Beispiel 1 | | Beispiel 2 | | Beispiel 3 | | Beispiel 4 | |
|---|---|---|---|---|---|---|---|---|
| Anteile Laserpigment [Gew.-%] | 0,05 | 0,05 | 1 | 1 | 2 | 2 | 10 | 10 |
| Werkstoff | MDF | Span | MDF | Span | MDF | Span | MDF | Span |
| Adhäsion bei RT | 2,3 | 2,4 | 1,9 | 2,0 | 1,8 | 2,0 | 2,1 | 2,1 |
| Adhäsion bei +5 °C | 2,6 | 2,8 | 1,9 | 2,1 | 1,9 | 2,0 | 2,4 | 2,5 |
| aufsteigender Wärmetest bis 120 °C | k.s.V. | k.s.V. | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. | k.s.V. | k.s.V. |
| Adhäsion bei RT nach Wärmelangzeittest | 2,4 | 2,4 | 2,0 | 2,0 | 2,1 | 2,0 | 2,1 | 2,2 |

Die vorstehenden Ausführungen zeigen, dass sich mit allen getesteten Konzentrationen des Laserpigments im Bereich von 0,05 Gew.-% bis 10 Gew.-%, jeweils bezogen auf die Dispersion bzw. Lösung, stabile Klebeverbindungen erzeugen lassen. Die besten Ergebnisse wurden jedoch mit gewichtsbezogenen Mengen im Bereich von 1 Gew.-% bzw. 2 Gew.-% erzielt. Bei Einsatz von 0,05 Gew.-% des Laserpigments ließ die Stabilität der Klebeverbindung leicht nach, war aber insgesamt immer noch als "gut" zu bezeichnen. Bei Einsatz von 10 Gew.-% des Laserpigments konnte zwar ebenfalls eine stabile Klebeverbindung erzeugt werden, allerdings ließ sich die Lösung bzw. Dispersion des Klebstoffpolymers aufgrund des hohen Feststoffanteils nur noch äußerst schwer verarbeiten und auf dem Kantenband verteilen, da sie eine zähe Konsistenz aufwies. Darüber hinaus wurde die Optik der resultierenden Klebstofffuge durch den Einsatz großer Mengen des Laseradditivs leicht beeinträchtigt, da in Folge der eingeschränkten Verteilbarkeit die Fuge leicht unregelmäßige Dicken aufwies. Außerdem ist der Einsatz größerer Mengen des Laserpigments unwirtschaftlich.

### (ii) Einfluss des Einsatzes von Filmbildern

In einer zweiten Versuchsreihe erfindungsgemäßer Ausführungsformen wurde darüber hinaus der Einfluss des zusätzlichen Einsatzes von Filmbildnern auf die Klebeverbindung untersucht. Die in diesem Zusammenhang eingesetzten Dispersionen bzw. Lösungen des Klebstoffpolymers enthielten 1,5 Gew.-% des Laseradditivs, bezogen auf die Dispersion bzw. Lösung, sowie Polyvinylacetat als Klebstoffpolymer. Als Filmbildner wurde Propylencarbonat eingesetzt.

Die diesbezüglich erhaltenen Ergebnisse sind in der nachfolgenden Tabelle 2 aufgeführt:

**Tabelle 2: Einfluss des Filmbildners auf die Qualität der Klebeverbindungen**

| | Beispiel 5 | | Beispiel 6 | |
|---|---|---|---|---|
| Anteile Filmbildner [Gew.-%] | 0,05 | 0,05 | 2 | 2 |
| Werkstoff | MDF | Span | MDF | Span |
| Adhäsion bei RT | 1,5 | 1,6 | 1,6 | 1,6 |
| Adhäsion bei +5 °C | 1,6 | 1,8 | 1,7 | 1,9 |
| Aufsteigender Wärmetest bis 120 °C | k.s.V. | k.s.V. | k.s.V. | k.s.V. |
| Wärmelangzeittest | k.s.V. | k.s.V. | k.s.V. | k.s.V. |
| Adhäsion bei RT nach Wärmelangzeittest | 1,6 | 1,7 | 1,8 | 1,9 |

Wie den in Tabelle 2 aufgeführten Ergebnissen zu entnehmen ist, kann durch den zusätzlichen Einsatz eines Filmbildners die Qualität der Klebeverbindungen noch weitergehend verbessert werden. Ohne sich hierbei auf diese Theorie beschränken zu wollen, bewirkt der Filmbildner eine noch gleichmäßigere Verteilung der Lösung bzw. Dispersion und somit auch der laseraktivierbaren Additive auf dem Kantenband. Auf diese Weise kann eine noch gleichmäßigere Erwärmung und somit Vernetzung der Klebstoffpolymere zur Aushärtung erzielt werden. Sowohl bei Einsatz von 0,05 Gew.-% als auch
2,0 Gew.-% des Filmbildners, bezogen auf die Lösung bzw. Dispersion, wurden hervorragende Qualitäten der Klebeverbindungen erzielt.

### (iii) Einfluss der Auswahl des eingesetzten Klebstoffpolymers

In einer dritten Versuchsreihe erfindungsgemäßer Ausführungsformen wurde der Einfluss des jeweils eingesetzten Klebstoffpolymers auf die Qualität der Klebeverbindungen untersucht. Dabei wurden jeweils die erfindungsgemäß bevorzugten Klebstoffpolymere (Polyvinylacetat, Polyacrylat, Polyurethane, Ethylenvinylacetat) als Klebstoffpolymer eingesetzt. Weiterhin enthielten die Dispersionen bzw. Lösungen des Klebstoffpolymers das Laserpigment jeweils in einer gewichtsbezogenen Menge von 1,5 Gew.-%, bezogen auf die Dispersion bzw. Lösung.

Die diesbezüglich erhaltenen Ergebnisse sind der nachfolgenden Tabelle 3 zu entnehmen:

**Tabelle 3: Einfluss des Klebstoffpolymers auf die Qualität der Klebeverbindungen**

| | Beispiel 9 | | Beispiel 10 | | Beispiel 11 | | Beispiel 12 | |
|---|---|---|---|---|---|---|---|---|
| Klebstoffpolymer | Polyvinylacetat | | Polyacrylat | | Polyurethan | | Ethylenvinylacetat | |
| Werkstoff | MDF | Span | MDF | Span | MDF | Span | MDF | Span |
| Adhäsion bei RT | 1,9 | 2,2 | 2,0 | 2,1 | 2,2 | 2,3 | 2,1 | 2,1 |
| Adhäsion bei +5 °C | 2,0 | 2,0 | 2,2 | 2,3 | 2,3 | 2,4 | 2,2 | 2,3 |
| Aufsteigender Wärmetest bis 120 °C | k.s.V. | k.s.V. | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. | k.s.V. | k.s.V. |
| Adhäsion bei RT nach Wärmelangzeittest | 2,0 | 2,1 | 2,1 | 2,2 | 2,4 | 2,3 | 2,2 | 2,3 |

Wie die vorstehenden Ausführungen zeigen, lassen sich mit allen erfindungsgemäß bevorzugten Polymere gute Werte in Bezug auf die Stabilität der Klebeverbindungen erhalten. Somit sind alle Klebstoffpolymere gleichermaßen zur Erzeugung stabiler Klebeverbindungen zwischen Werkstoff und Kantenband geeignet. Die besten Werte wurden bei Einsatz von Polyvinylacetat erzielt.

### (iv) Einfluss der Oberflächenvorbehandlung

Schließlich wurde in einer vierten Versuchsreihe der Einfluss der Vorbereitung der Oberfläche auf die Klebstoffschicht in Bezug auf die Erzeugung stabiler Klebeverbindungen untersucht. Im Rahmen dieses Vergleichstests wurden unbehandelte Kantenbänder, mittels Coronabehandlung behandelte Kantenbänder sowie mit einem Haftvermittler (Primer) beschichtete Kantenbänder eingesetzt. Die nachfolgend aufgetragenen Lösungen bzw. Dispersionen des Klebstoffpolymers enthielten jeweils 1,5 Gew.-%, bezogen auf die Lösung bzw. Dispersion, des Laseradditivs. Als Klebstoffpolymer wurde jeweils Polyvinylacetat eingesetzt.

Die diesbezüglich erhaltenen Ergebnisse sind der nachfolgenden Tabelle 4 zu entnehmen:

**Tabelle 4: Einfluss der Oberflächenvorbehandlung auf die Klebeverbindung**

| | Beispiel 13 | | Beispiel 14 | | Beispiel 15 | |
|---|---|---|---|---|---|---|
| Vorbereitung der Oberfläche | Keine Vorbehandlung | | Coronabehandlung | | Haftvermittler (Primer) | |
| Werkstoff | MDF | Span | MDF | Span | MDF | Span |
| Adhäsion bei RT | 2,1 | 2,2 | 1,7 | 1,8 | 1,7 | 1,9 |
| Adhäsion bei +5 °C | 2,1 | 2,3 | 1,8 | 1,8 | 1,7 | 2,0 |
| aufsteigender Wärmetest bis 120 °C | k.s.V. | k.s.V. | k.s.V. | k.s.V. | k.s.V. | k.s.V. |
| Wärmelangzeittest | k.s.V. | k.s.V. | k.s.V. | k.s.V. | k.s.V. | k.s.V. |
| Adhäsion bei RT nach Wärmelangzeittest | 2,2 | 2,3 | 1,8 | 1,8 | 1,8 | 2,0 |

Zwar lassen sich auch ohne Oberflächenvorbereitung hervorragende Klebeverbindungen erzeugen, allerdings kann die Qualität bzw. Adhäsion von Kantenband und Klebstoffschicht und in der Folge auch die Qualität der Klebstoffverbindung durch eine Vorbehandlung weiter gesteigert werden. Dabei werden sowohl bei Einsatz von Coronabehandlung als auch bei der Beschichtung mit einem Haftvermittler hervorragende Werte in Bezug auf die Stabilität der Klebeverbindungen erzielt werden.

### (v) Einfluss der Anwesenheit eines Laserpigments

In einer letzten Versuchsreihe wurden zu Vergleichszwecken nichterfindungsgemäße Ausführungsformen bereitgestellt und auf die Qualität der Klebeverbindungen untersucht. Im Gegensatz zu den erfindungsgemäßen Ausführungsformen enthielten die nichterfindungsgemäßen Ausführungsformen in der Dispersion bzw. Lösung des Klebstoffpolymers kein Laserpigment. Als Klebstoffpolymere wurden Polyurethan, Polyacrylat sowie Ethylenvinylacetat eingesetzt.

Ohne den Einsatz von Laserpigmenten lassen sich keine stabilen Klebstoffverbindungen erzeugen. Zwar konnte zunächst nach der Laserbehandlung eine Anleimung des Kantenbandes festgestellt werden, sobald jedoch auch nur geringer Druck bzw. geringe Kräfte ausgeübt wurden, wie sie auch beim üblichen Behandeln bzw. Weiterverarbeiten derartiger beschichteter Werkstoffe auftreten, konnte keine ausreichende Stabilität mehr verzeichnet werden. Vielmehr lösten sich die Kantenbänder sofort wieder unter Brechen der Klebstoffschicht von dem Werkstoff ab. Das Problem der instabilen Klebeverbindung trat gleichermaßen bei allen eingesetzten Klebstoffpolymeren auf. Darüber hinaus lösten sich die Klebstoffverbindungen auch unter Wärmeeinwirkung. Folglich konnten die erhaltenen Werkstoffe keinen weitergehenden Tests unterzogen werden.

Der Einsatz des Laserpigments ist somit essentiell für die Erzeugung stabiler Klebeverbindungen im Rahmen des erfindungsgemäßen Konzepts.

Die obigen Ausführungen zeigen, dass es im Rahmen der vorliegenden Erfindung erstmals gelungen ist, ein kostengünstiges Nachbeschichtungsverfahren für Kantenbänder bereitzustellen, welches die Erzeugung von sowohl bei Raumtemperatur als auch bei Kälte bzw. hohen Temperaturen stabilen Klebstoffverbindungen erlaubt, wie sie bislang nur mittels der kostenaufwendigen und wenig ökonomischen Koextrusion realisiert werden konnten.

## Patentansprüche

1. Verfahren zur Anbringung einer Kante, insbesondere Kunststoffkante, auf einen Werkstoff, insbesondere Verfahren zur Anbringung eines Kantenbands (Kantenstreifens) auf mindestens eine Schmalfläche (Schmalseite) eines insbesondere plattenförmigen Werkstoffteils (Werkstücks), mittels Fügen und/oder mittels Verkleben, wobei
(a) zunächst das Kantenband auf seiner mit dem Werkstoff, insbesondere Werkstoffteil, zu verbindenden Seite mit einer mittels Laserstrahlung aktivierbaren (laseraktivierbaren) Klebstoffschicht (Kunststoffschicht) beaufschlagt und/oder versehen wird, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten wird, und
(b) nachfolgend das auf diese Weise mit der mittels Laserstrahlung aktivierbaren Klebstoffschicht beaufschlagte und/oder versehene Kantenband unter Einwirkung von Laserstrahlung auf mindestens eine Schmalfläche des Werkstoffteils angebracht wird, insbesondere dauerhaft mit mindestens einer Schmalfläche des Werkstoffteils verbunden und/oder verklebt wird.

2. Verfahren nach Anspruch 1,
wobei als Kante, insbesondere Kantenband, ein Kantenband aus einem thermoplastischen oder duroplastischen Kunststoff oder aus Holz oder aus Papier oder Pappe oder aus Metallen, insbesondere ein Kantenband aus einem thermoplastischen oder duroplastischen Kunststoff, vorzugsweise ein Kantenband aus einem thermoplastischen Kunststoff, eingesetzt wird; und/oder
wobei als Kunststoffkante, insbesondere Kantenband, ein Kantenband auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, eingesetzt wird; und/oder
wobei als Werkstoff, insbesondere plattenförmiges Werkstoffteil, Holz, Holzersatzstoffe, Kunststoffe, Metallen oder Glas, vorzugsweise Holz oder Holzersatzstoffe, eingesetzt wird.

3. Verfahren nach Anspruch 1 oder 2, wobei die Kante, insbesondere das Kantenband, vor Beaufschlagung mit der Dispersion oder Lösung des Klebstoffpolymers mit einem Haftvermittler (Primer) versehen und/oder beschichtet wird und/oder einer Oberflächenbehandlung und/oder Oberflächenaktivierung, vorzugsweise mittels Coronabehandlung oder Plasmabehandlung, unterzogen wird, insbesondere wobei der Haftvermittler ausgewählt wird aus der Gruppe von Polymerlösungen oder Polymerdispersionen, insbesondere lösemittelhaltigen oder vorzugsweise wässrigen Polymerdispersionen, vorzugsweise Polyurethan(PU)-Dispersionsklebstoffen, und/oder wobei als Haftvermittler vorzugsweise wässrige Polymerdispersionen eingesetzt werden, insbesondere ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen und/oder wobei als Haftvermittler eine wässrige Polymerdispersion auf Basis einer insbesondere wässrig basierten Polyurethandispersion eingesetzt wird.

4. Verfahren nach einem der vorangehenden Ansprüche,
wobei die in Verfahrensschritt (a) eingesetzte Dispersion oder Lösung des Klebstoffpolymers zur Beaufschlagung der Kante, insbesondere des Kantenbands, mit einer mittels Laserstrahlung aktivierbaren Klebstoffschicht wässrig-basiert oder organisch-basiert, vorzugsweise wässrig-basiert, ausgebildet ist; und/oder
wobei das Klebstoffpolymer ausgewählt ist aus Homo- und Copolymeren; und/oder
wobei das Klebstoffpolymer ausgewählt ist aus der Gruppe von (i) Polyurethanen; (ii) Polyacrylaten und Polymethacrylaten; (iii) Ethylenvinylacetaten; (iv) Polyvinylacetaten sowie deren Mischungen und Kombinationen; und/oder
wobei das Klebstoffpolymer ein mittleres Molekulargewicht, insbesondere gewichtsmittleres Molekulargewicht (Mw), von mindestens 70.000 g/mol, insbesondere mindestens 85.000 g/mol, vorzugsweise mindestens 100.000 g/mol, aufweist und/oder wobei das Klebstoffpolymer ein mittleres Molekulargewicht, insbesondere gewichtsmittleres Molekulargewicht (Mw), im Bereich von 70.000 g/mol bis 10.000.000 g/mol, insbesondere im Bereich von 85.000 g/mol bis 5.000.000 g/mol, vorzugsweise im Bereich von 100.000 g/mol bis 3.000.000 g/mol, bevorzugt im Bereich von 150.000 g/mol bis 2.000.000 g/mol, besonders bevorzugt im Bereich von 175.000 g/mol bis 1.500.000 g/mol, ganz besonders bevorzugt im Bereich von 200.000 g/mol bis 1.000.000 g/mol, aufweist; und/oder
wobei das Klebstoffpolymer bei einer Temperatur von 190 °C und einer Last von 2,16 kg einen Schmelzindex, insbesondere bestimmt nach ISO 1133, von höchstens 50 g/10 min, insbesondere höchstens 30 g/10 min, vorzugsweise höchstens 25 g/10 min, aufweist und/oder wobei das Klebstoffpolymer bei einer Temperatur von 190 °C und einer Last von 2,16 kg einen Schmelzindex, insbesondere bestimmt nach ISO 1133, im Bereich von 0,01 g/10 min bis 50 g/10 min, insbesondere im Bereich von 0,1 g/10 min bis 30 g/10 min, vorzugsweise im Bereich von 0,2 g/10 min bis 25 g/10 min, bevorzugt im Bereich von 0,3 g/10 min bis 20 g/10 min, aufweist; und/oder wobei die in Verfahrensschritt (a) eingesetzte Dispersion oder Lösung das Klebstoffpolymer in einer Menge im Bereich von 5 bis 90 Gew.-%, insbesondere 10 bis 80 Gew.-%, vorzugsweise 15 bis 70 Gew.-%, bevorzugt 17,5 bis 65 Gew.-%, besonders bevorzugt 20 bis 60 Gew.-%, ganz besonders bevorzugt 25 bis 55 Gew.-%, bezogen auf die Dispersion oder Lösung, aufweist.

5. Verfahren nach einem der vorangehenden Ansprüche,
wobei das Laserstrahlung absorbierende Additiv, insbesondere Pigment, energieabsorbierend und/oder wärmeleitend, insbesondere reversibel energieabsorbierend und wärmeleitend, ausgebildet ist; und/oder wobei das Laserstrahlung absorbierende Additiv, insbesondere Pigment, einzelne und/oder diskrete Partikel umfasst und/oder hieraus besteht, insbesondere wobei die einzelnen und/oder diskreten Partikel einen mittleren (Teilchen-)Durchmesser, berechnet als D50-Wert, im Bereich von 0,001 bis 1.000 µm, insbesondere 0,01 bis 500 µm, vorzugsweise 0,05 bis 200 µm, bevorzugt 0,1 bis 150 µm, besonders bevorzugt 0,2 bis 100 µm, aufweisen; und/oder
wobei das Laserstrahlung absorbierende Additiv, insbesondere Pigment, anorganisch basiert und/oder mineralisch basiert ausgebildet ist; und/oder wobei das Laserstrahlung absorbierende Additiv, insbesondere Pigment, auf Basis von Metallen und anorganischen Metallverbindungen, insbesondere Metalloxiden, Metallhydroxiden, Metallsilikaten, Metallaluminaten, Metallphosphaten, Metallsulfaten sowie deren Kombinationen und Mischungen, ausgebildet ist; und/oder
wobei das Laserstrahlung absorbierende Additiv, insbesondere Pigment, sphärisch ausgebildet ist; und/oder
wobei das Laserstrahlung absorbierende Additiv einen Träger aufweist, insbesondere wobei der Träger als vorzugsweise sphärischer Kern, welcher von einer äußeren Beschichtung oder Hülle umgeben ist, ausgebildet ist, insbesondere wobei der Träger vollständig oder teilweise beschichtet ist und/oder der Träger Agglomerate, insbesondere an der Oberfläche des Trägers, aufweist und/oder hiermit vollständig oder teilweise beschichtet ist und/oder insbesondere wobei der Träger auf Basis von Metallen, anorganischen Metallverbindungen oder organischen Polymeren, insbesondere Metalloxiden, Metallhydroxiden, Metallsilikaten, Metallaluminaten, Metallphosphaten, Metallsulfaten sowie deren Kombinationen und Mischungen, vorzugsweise Silikaten, insbesondere Schichtsilikaten, Glimmer, Magnesiumsilikaten, Aluminiumsilikaten, Alkalialuminiumsilikaten, Erdalkalialuminiumsilikaten und deren Kombinationen, Siliziumoxiden, Glaskugeln, Glashohlkugeln, Nylon, Polyacrylaten, Aluminiumoxiden sowie deren Kombinationen, ausgebildet ist und/oder insbesondere wobei die (äußere) Beschichtung und/oder Hülle und/oder die Agglomerate auf Basis von anorganischen Oxiden, Hydroxiden, Sulfaten, Silikaten, Phosphaten, Aluminaten, Cyanoferraten sowie deren Mischungen und Kombinationen, vorzugsweise auf Basis Titandioxid, Siliciumdioxid, Zinnoxid, Eisenoxid, Kupferhydroxidphosphat, Kupferphosphat, Antimonoxid sowie deren Kombinationen und Mischungen, ausgebildet ist; und/oder
wobei die in Verfahrensschritt (a) eingesetzte Dispersion oder Lösung das Laserstrahlung absorbierende Additiv, insbesondere Pigment, in einer Menge im Bereich von 0,001 bis 10 Gew.-%, insbesondere im Bereich von 0,01 bis 7,5 Gew.-%, vorzugsweise im Bereich von 0,01 bis 5 Gew.-%, bevorzugt im Bereich von 0,05 bis 4,5 Gew.-%, besonders bevorzugt im Bereich von 0,1 bis 4 Gew.-%, ganz besonders bevorzugt im Bereich von 0,5 bis 3,5 Gew.-%, bezogen auf die Dispersion oder Lösung, aufweist.

6. Verfahren nach einem der vorangehenden Ansprüche,
wobei die in Verfahrensschritt (a) eingesetzte Dispersion oder Lösung außerdem mindestens ein Filmbildungshilfsmittel und/oder mindestens einen Filmbildner enthält, insbesondere in Mengen im Bereich von 0,001 bis 6 Gew.-%, insbesondere im Bereich von 0,01 bis 5 Gew.-%, vorzugsweise im Bereich von 0,01 bis 4 Gew.-%, bevorzugt im Bereich von 0,05 bis 3,5 Gew.-%, besonders bevorzugt im Bereich von 0,1 bis 3 Gew.-%, bezogen auf die Dispersion oder Lösung; und/oder
wobei die in Verfahrensschritt (a) eingesetzte Dispersion oder Lösung außerdem mindestens ein weiteres Additiv und/oder mindestens einen weiteren Hilfsstoff enthält, insbesondere ausgewählt aus Dispergierhilfsmitteln, Emulgatoren, Füllstoffen, Entschäumern, Farbstoffen, Färbemitteln, Vergilbungsinhibitoren, Antioxidationsmitteln, Stabilisatoren, Konservierungsmitteln, UV-Absorbern, UV-Stabilisatoren, Verlaufsmitteln, Rheologiemodifikatoren, Viskositätsregulatoren, Verdickungsmitteln, pH-Stellmitteln, Schutzkolloiden sowie deren Mischungen und Kombinationen.

7. Verfahren nach einem der vorangehenden Ansprüche,
wobei in Verfahrensschritt (a) zum Erhalt einer mittels Laserstrahlung aktivierbaren Kunststoffschicht das Kantenband mit der Dispersion oder Lösung des Klebstoffpolymers durch Beschichtungsverfahren, insbesondere durch thermisches, chemisches, mechanisches oder thermomechanisches Beschichten, vorzugsweise durch Rakeln, Walzen, Sprühauftrag, Düsen, Spritzen oder Plastifizieren, beaufschlagt und/oder versehen wird; und/oder
wobei in Verfahrensschritt (a) die Dispersion oder Lösung des Klebstoffpolymers in einer Auftragsmenge von höchstens 300 g/m², insbesondere höchstens 200 g/m², vorzugsweise höchstens 150 g/m², aufgetragen wird und/oder in Verfahrensschritt (a) die Dispersion oder Lösung des Klebstoffpolymers in einer Auftragsmenge im Bereich von 1 bis 300 g/m², insbesondere im Bereich von 5 bis 200 g/m², bevorzugt im Bereich von 10 bis 150 g/m², aufgetragen wird; und/oder
wobei Verfahrensschritt (a) kontinuierlich, insbesondere als Durchlaufverfahren, oder aber stationär, vorzugsweise als Durchlaufverfahren, betrieben wird; und/oder
wobei Verfahrensschritt (a) als Durchlaufverfahren mit einem Vorschub von mindestens 1 m/min, insbesondere mindestens 5 m/min, vorzugsweise mindestens 10 m/min, bevorzugt mindestens 15 m/min, besonders bevorzugt mindestens 20 m/min, durchgeführt wird und/oder Verfahrensschritt (a) als Durchlaufverfahren mit einem Vorschub im Bereich von 1 bis 100 m/min, insbesondere im Bereich von 5 bis 75 m/min, vorzugsweise im Bereich von 10 bis 60 m/min, bevorzugt im Bereich von 15 bis 50 m/min, besonders bevorzugt im Bereich von 20 bis 40 m/min, durchgeführt wird; und/oder wobei in Verfahrensschritt (a) nach der Beaufschlagung des Kantenbands mit der Dispersion oder Lösung des Klebstoffpolymers das Dispersionsmedium oder Lösemittel entfernt wird, insbesondere mittels Trocknung und/oder Verdampfen des Dispersionsmediums oder Lösemittels bei Raumtemperatur, insbesondere 25 °C, oder bei erhöhten Temperaturen und/oder bei Atmosphärendruck oder reduziertem Druck, insbesondere zum Erhalt einer nichtklebrigen und/oder klebefreien, aber mittels Laserstrahlung aktivierbaren und/oder verklebbaren Kunststoffschicht und/oder Klebstoffschicht.

8. Verfahren nach einem der vorangehenden Ansprüche,
wobei die aus Verfahrensschritt (a) resultierende, mittels Laserstrahlung aktivierbare Kunststoffschicht und/oder Klebstoffschicht eine Dicke von höchstens 200 µm, insbesondere höchstens 150 µm, vorzugsweise höchstens 100 µm, aufweist und/oder wobei die aus Verfahrensschritt (a) resultierende, mittels Laserstrahlung aktivierbare Kunststoffschicht und/oder Klebstoffschicht eine Dicke im Bereich von 0,1 bis 200 µm, insbesondere im Bereich von 0,5 bis 150 µm, vorzugsweise im Bereich von 1 bis 100 µm, aufweist; und/oder
wobei die aus Verfahrensschritt (a) resultierende, mittels Laserstrahlung aktivierbare Kunststoffschicht und/oder Klebstoffschicht das Laserstrahlung absorbierende Additiv, insbesondere Pigment, als Inhaltsstoff oder integralen Bestandteil aufweist, insbesondere wobei das Laserstrahlung absorbierende Additiv, insbesondere Pigment, gleichmäßig und/oder homogen in der Kunststoffschicht und/oder Klebstoffschicht verteilt ist und/oder insbesondere wobei die Kunststoffschicht und/oder Klebstoffschicht das Laserstrahlung absorbierende Additiv, insbesondere Pigment, in Mengen im Bereich von 0,005 bis 30 Gew.-%, insbesondere im Bereich von 0,05 bis 25 Gew.-%, vorzugsweise im Bereich von 0,1 bis 20 Gew.-%, bevorzugt im Bereich von 0,5 bis 15 Gew.-%, besonders bevorzugt im Bereich von 1 bis 10 Gew.-%, bezogen auf die Kunststoffschicht und/oder Klebstoffschicht, enthält; und/oder
wobei die Kante, insbesondere das Kantenband, und die mittels Laserstrahlung aktivierbare Klebstoffschicht vor dem Fügevorgang, insbesondere vor Anbringung der Kante, insbesondere des Kantenbands, auf den Werkstoff, dauerhaft und/oder untrennbar miteinander verbunden werden.

9. Verfahren nach einem der vorangehenden Ansprüche,
wobei in Verfahrensschritt (b) die aus Verfahrensschritt (a) resultierende, mittels Laserstrahlung aktivierbare Klebstoffschicht unter Einwirkung von Laserstrahlung auf dem Kantenband erwärmt, insbesondere zumindest teilweise geschmolzen und/oder in einen klebefähigen und/oder klebrigen Zustand überführt, wird; und/oder
wobei in Verfahrensschritt (b) die Einwirkung von Laserstrahlung ein Erwärmen der Klebstoffschicht auf Temperaturen im Bereich von 50 bis 400 °C, insbesondere 70 bis 300 °C, vorzugsweise 100 bis 250 °C, bewirkt; und/oder wobei in Verfahrensschritt (b) die Einwirkung von Laserstrahlung mittels einer Laserquelle, insbesondere eines Halbleiterlasers, Festkörperlasers, Faser-Lasers oder CO₂-Lasers vorzugsweise Festkörperlasers oder Halbleiterlasers, bevorzugt Nd:YAG-Lasers oder Diodenlasers, durchgeführt wird; und/oder
wobei in Verfahrensschritt (b) Laserstrahlung mit einer Wellenlänge im Bereich von 150 nm bis 10,6 µm, insbesondere 250 nm bis 10,6 µm, vorzugsweise 300 nm bis 10,6 µm, bevorzugt 500 nm bis 10,6 µm, eingesetzt wird; und/oder
wobei in Verfahrensschritt (b) durch die Einwirkung von Laserstrahlung eine Energiedichte im Bereich von 0,1 mJ/cm² bis 50 J/cm², insbesondere 0,2 mJ/cm² bis 30 J/cm², vorzugsweise 0,3 mJ/cm² bis 10 J/cm², erzeugt wird; und/oder
wobei das Anbringen der Kante, insbesondere Kunststoffkante, auf den Werkstoff, insbesondere das Anbringen des Kantenbands auf die Schmalfläche des insbesondere plattenförmigen Werkstoffteils, mittels Fügen, vorzugsweise unter Andrücken und/oder Anpressen, insbesondere in einem Durchlaufverfahren, erfolgt; und/oder
wobei die Verfahrensschritte (a) und (b) separat und/oder (räumlich) getrennt voneinander durchgeführt werden, vorzugsweise im Rahmen eines Offline-Prozesses.

10. Werkstoff, insbesondere plattenförmiges Werkstoffteil (Werkstück), wobei mindestens eine Schmalfläche (Schmalseite) des Werkstoffs mit einem Kantenband (Kantenstreifen) versehen ist und wobei der Werkstoff erhältlich ist durch ein Verfahren nach einem der vorangehenden Ansprüche.

11. Werkstoff, insbesondere plattenförmiges Werkstoffteil (Werkstück), wobei mindestens eine Schmalfläche (Schmalseite) des Werkstoffs mit einem Kantenband (Kantenstreifen) versehen ist, wobei das Kantenband mittels Fügen und/oder mittels Verkleben auf die Schmalfläche aufgebracht und dauerhaft hiermit verbunden ist, wobei das Kantenband vor seiner Aufbringung auf den Werkstoff mit seiner mit dem Werkstoff zu verbindenden Seite mit einer mittels Laserstrahlung aktivierbaren (laseraktivierbaren) Klebstoffschicht (Kunststoffschicht) beaufschlagt und/oder versehen worden ist, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten ist, und wobei das Aufbringen und Verbinden des Kantenbands mit dem Werkstoff unter Einwirkung von Laserstrahlung und unter Andrücken und/oder Anpressen erfolgt ist.

12. Verwendung eines Werkstoffs, insbesondere plattenförmigen Werkstoffteils (Werkstücks), nach Anspruch 10 oder 11 zur Herstellung von Möbeln, insbesondere Küchenteilen, und Einrichtungsgegenständen beliebiger Art und/oder in der Holz- und Möbelindustrie.

13. Verfahren zur Aufbringung einer mittels Laserstrahlung aktivierbaren (laseraktivierbaren) Klebstoffschicht (Kunststoffschicht) auf mindestens eine Seite eines Kantenbands (Kantenstreifens), insbesondere zu Zwecken der nachfolgenden Anbringung der Kante, insbesondere Kunststoffkante, auf einen Werkstoff mittels Fügen und/oder mittels Verkleben, wobei das Kantenband auf mindestens einer seiner beiden Seiten, insbesondere seiner mit einem Werkstoff zu verbindenden Seite, mit einer mittels Laserstrahlung aktivierbaren (laseraktivierbaren) Klebstoffschicht (Kunststoffschicht) beaufschlagt und/oder versehen wird, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt wird, erhalten wird.

14. Kantenband (Kantenstreifen), welches auf mindestens einer Seite eine mittels Laserstrahlung aktivierbare (laseraktivierbare) Klebstoffschicht (Kunststoffschicht) aufweist und erhältlich ist durch ein Verfahren nach Anspruch 13.

15. Kantenband (Kantenstreifen), welches auf mindestens einer Seite mit einer mittels Laserstrahlung aktivierbaren (laseraktivierbaren) Klebstoffschicht (Kunststoffschicht) beaufschlagt und/oder versehen ist, wobei die mittels Laserstrahlung aktivierbare Klebstoffschicht ausgehend von einer Dispersion oder Lösung mindestens eines Klebstoffpolymers, welcher mindestens ein Laserstrahlung absorbierendes Additiv (Laseradditiv), insbesondere Pigment, zugesetzt ist, erhalten ist.

16. Verwendung einer Zusammensetzung, insbesondere in Form einer Dispersion oder Lösung, enthaltend mindestens ein Klebstoffpolymer und mindestens ein Laserstrahlung absorbierendes Additiv (Laseradditiv), insbesondere Pigment, zur Ausrüstung und/oder Beaufschlagung eines Kantenbands (Kantenstreifens) mit einer Klebstoffschicht (Kunststoffschicht), insbesondere zu Zwecken der Anbringung der Kante, insbesondere Kunststoffkante, auf einen Werkstoff mittels Fügen und/oder mittels Verkleben.

17. Mit einem Kantenband (Kantenstreifen) versehener Werkstoff nach Anspruch 10 oder 11, Verwendung nach Anspruch 12, Verfahren nach Anspruch 13, Kantenband nach Anspruch 14 oder 15 und/oder Verwendung nach Anspruch 16, jeweils **gekennzeichnet durch** eines oder mehrere der Merkmale eines der Ansprüche 1 bis 9.
